# EUROPEAN PATENT APPLICATION

(11) **EP 4 528 621 A1**
(43) Date of publication of application: **26.03.2025**
(21) Application number: 24189547.3
(22) Date of filing: 18.07.2024
(51) Int. Cl.: G06Q 20/18, G06Q 20/20, G07G 1/00, G07G 1/14

(54) **ATTENDANT TERMINAL AND TRANSACTION MANAGEMENT SYSTEM**

(30) Priority: 20.09.2023 JP 2023152493
(71) Applicant: Toshiba TEC Kabushiki Kaisha, Tokyo 141-8562 (JP)
(72) Inventor: Hamada, Kazuhiro, Tokyo, 141-8562 (JP)
(74) Representative: Bandpay & Greuter

(57) **Abstract**

According to one embodiment, an attendant terminal for monitoring of retail transactions includes a control unit and a communication interface that is connected to a transaction server. The control unit can cause a first screen to be displayed. The first screen lists transaction statuses for customer transactions managed by the transaction server. The control unit can receive a first-type or second-type designation of a specific transaction and cause a second screen to be displayed after the receiving either the first-type designation or the second-type designation. The second screen displays information about the specific transaction corresponding to the received designation and permits confirmation of an attendant checking operation prior to transaction payment when the first-type designation is received but does not permit confirmation of the attendant checking operation when the second-type designation is received.

## Description

### FIELD

Embodiments described herein relate generally to an attendant terminal apparatus and a transaction management system for retail transactions and the like.

### BACKGROUND

In recent years, in stores such as supermarkets, systems by which customers themselves register commodities have been adopted. As one such system, shopping carts to which tablet terminals and scanners are attached have been proposed.

Customers use scanners to scan code symbols, such as barcodes, attached to commodities ("commodity barcodes") to register commodities for purchase in the store. Commodity information (commodity names, prices, and the like) provided by commodity registration of the commodity codes read by the scanners are stored in tablet terminals or on store servers in communication with the tablet terminals. The registered commodity information is then transferred to cash registers (checkout terminals) at which checkout processes for paying (settling) the sales transaction are performed. The customers can perform the payment (checkout processes) by using the cash registers by themselves (without a store clerk).

A system in which shopping can be done using portable terminals such as smartphones instead of tablet terminals or scanners provided by the stores has also been adopted. In such systems, shopping application programs are installed on smartphones of the customers. Then, commodity barcodes of items to be purchased are imaged with cameras of the smartphones to read the commodity codes.

In stores where these systems are adopted, staff is generally assigned to checkout areas where cash registers are installed. The staff assigned in the checkout areas (also referred to as "attendants") perform support and checking of commodities being purchased by the customers. The staff assists with operations of the cash registers for the customers. The attendant checking performed at different stores can be different according to store administration preference and the like. For example, attendants may perform verification of customer age when age-restricted commodities are being purchased.

Attendants also perform checking of operations at cash registers for payment by customers. For example, when commodities to be purchased by customers include age-restricted commodities, call lamps of the cash registers turn on and the attendants is notified to move to the cash register and perform an age verification of the customer. In such a system, the attendants have to move to the cash registers every time this work is necessary, and thus the confirmation work of the attendants may be difficult or complex.

### DISCLOSURE

To this end, an attendant terminal for monitoring of retail transactions and a retail transaction management system according to appended claims are provided.

### BRIEF DESCRIPTION OF THE DRAWINGS

FIG. 1 is a diagram illustrating an overview of a transaction management system according to an embodiment.
FIG. 2 is a diagram illustrating an example of a checkout area of a store where a transaction management system is adopted.
FIG. 3 is a block diagram of a server apparatus according to an embodiment.
FIG. 4 is a diagram illustrating an example of a data configuration of a commodity master stored in a storage unit of a server apparatus.
FIG. 5 is a diagram illustrating an example of a data configuration of a terminal management table stored in a storage unit of a server apparatus.
FIG. 6 is a diagram illustrating an example of a data configuration of a highlight information management table stored in a storage unit of a server apparatus.
FIG. 7 is a diagram illustrating an example of a data configuration of a transaction information management table stored in a storage unit of a server apparatus.
FIG. 8 is a diagram illustrating an example of a data configuration of a mode management table stored in a storage unit of a server apparatus.
FIG. 9 is a block diagram of certain aspects of a control unit of a server apparatus.
FIG. 10 is a block diagram of a portable terminal according to an embodiment.
FIG. 11 is a block diagram of certain aspects of a control unit of the portable terminal.
FIG. 12 is a block diagram of an attendant PC according to an embodiment.
FIG. 13 is a diagram illustrating an example of a data configuration of a status management table stored in a storage unit of an attendant PC.
FIG. 14 is a block diagram of certain aspects of a control unit of an attendant PC.
FIG. 15 is a sequence chart illustrating an example of an operation of a transaction management system.
FIG. 16 is a diagram illustrating an example of a transaction information display screen displayed by a portable terminal.
FIG. 17 is a diagram illustrating an example of a transaction list screen displayed by an attendant PC.
FIG. 18 is a diagram illustrating an example of an attendant checking screen displayed by a portable terminal.
FIG. 19 is a diagram illustrating an example of a transaction detail screen displayed by an attendant PC.
FIG. 20 is a diagram illustrating an example of a guidance screen displayed by an attendant PC.
FIG. 21 is a diagram illustrating an example of a checkout screen displayed by a portable terminal.
FIG. 22 is a flowchart of a transaction detail screen displaying process by a control unit of an attendant PC.
FIG. 23 is a diagram illustrating an example of a browsing transaction detail screen displayed by an attendant PC.
FIG. 24 is a sequence chart illustrating an example of a transaction editing process performed between an attendant PC and a server apparatus.
FIG. 25 is a flowchart of an attendant checking determination process by a control unit of an server apparatus.
FIG. 26 is a diagram illustrating an example of a highlight setting screen displayed by an attendant PC.
FIG. 27 is a flowchart of an attendant checking process by a control unit of a cash register according to a modification.

### DETAILED DESCRIPTION

Embodiments represent technological improvements to existing systems and devices related to increased efficiency of attendant checking operations in retail settings.

In general, according to one embodiment, an attendant terminal for monitoring of retail transactions includes a control unit and a communication interface connectable to a transaction management apparatus. The control unit is configured to cause a first screen to be displayed on a display screen. The first screen lists present transaction statuses for a plurality of customer transactions managed by the transaction management apparatus. The control unit is configured to receive a first-type designation or a second-type designation of a specific transaction in the plurality of customer transactions. The control unit is configured to cause a second screen to be displayed on the display screen after the receiving either the first-type designation or the second-type designation. The second screen displays transaction information of the specific transaction corresponding to the received first-type or second-type designation and permits confirmation of an attendant checking operation for the specific transaction when the first-type designation is received but does not permit confirmation of the attendant checking operation when the second-type designation is received.

An attendant terminal apparatus and a transaction management system according to certain example embodiments will be described. The disclosure is not limited to the specific example embodiments described below. For example, in one embodiment, an information processing apparatus is used as a stationary terminal apparatus (referred to as an attendant terminal) operated by store staff, but the information processing apparatus may be other type devices and is not limited thereto. The information processing apparatus may be a server apparatus that manages information regarding a store or a plurality of stores. Such an information processing apparatus may be installed in a store or otherwise.

In an embodiment, a customer-owned portable terminal that can be used for commodity registration is described, but the portable terminal may be other types and is not limited thereto. For example, the portable terminal may be provided by the store rather than by the customer. In general, any device that can be used by a customer or otherwise for commodity registration can be adopted. In this context, commodity registration refers to storing (registering) information regarding a commodity to be purchased by a customer.

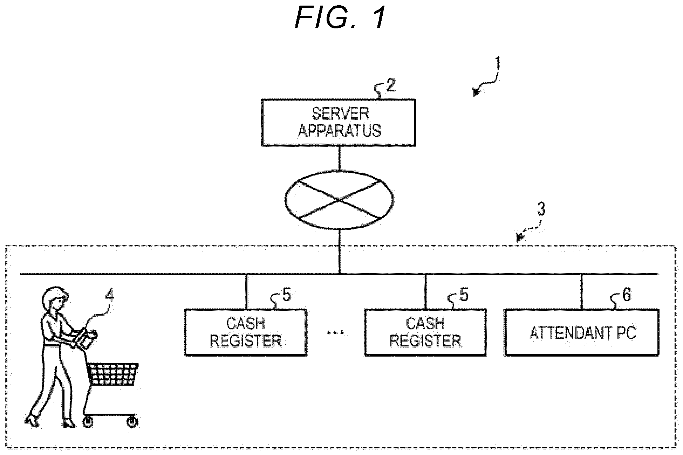

Hereinafter, a transaction management system according to an example embodiment will be described with reference to the drawings. FIG. 1 is a diagram illustrating an overview of a transaction management system 1. The transaction management system 1 is used in a store such as a supermarket where a variety of commodities (items/products) are sold. The transaction management system 1 includes a server apparatus 2 and a movable self-register system 3. The server apparatus 2 and the movable self-register system 3 are able to communicate with each other via a network such as the Internet.

The movable self-register system 3 is in a store and includes a portable terminal 4 carried by a customer, a cash register 5, and an attendant PC 6. The portable terminal 4, the cash register 5, and the attendant PC 6 are able to communicate with each other via an in-store network such as a local area network (LAN). The portable terminal 4, the cash register 5, and the attendant PC 6 are able to communicate with the server apparatus 2 via the in-store network.

In some examples, the portable terminal 4 may be able to communicate with the server apparatus 2 without going through the in-store network. Various additional apparatuses may be connected to the in-store network. For example, a POS terminal at which a staff member performs commodity registration and payment handling, a self-service-type POS terminal at which a customer performs commodity registration and payment, and/or a semi-self-service-type POS system with which a staff member performs commodity registration and a customer performs payment, may be connected to the in-store network. Furthermore, the number of portable terminals 4 and the number of cash registers 5 are not limited.

The server apparatus 2 is, for example, a store server. The server apparatus 2 receives entry information from the portable terminal 4. The entry information includes a company code or a store code of a store where a presently shopping customer is located. The server apparatus 2 can identify a store where the portable terminal 4 is present by receiving the entry information from the portable terminal 4. The server apparatus 2 issues a terminal code and a transaction code to the portable terminal 4. The terminal code is terminal-specific information for identifying the portable terminal 4 and the transaction code is transaction-specific information for identifying a particular transaction.

The server apparatus 2 transmits mode information to the portable terminal 4. In this context, mode information is any information indicating an operating mode of the movable self-register system 3 at the store where the customer is located. Details of the mode information will be described below.

When the portable terminal 4 transmits various information to the server apparatus 2, the server apparatus 2 can easily specify the portable terminal 4 by the terminal code. In the embodiment, a plurality of transaction codes are not issued to one portable terminal 4 while during shopping of the customer. That is, since the terminal code and the transaction code have one-to-one correspondence, one of these codes can be allowed to have a function of the other.

Specifically, transaction can be specified with the terminal code. Accordingly, the terminal code is also an example of the transaction-specific information. The portable terminal 4 can be specified with the transaction code. Accordingly, the transaction code is also an example of the terminal-specific information. Therefore, in the following description, the terminal code and the transaction code are assumed to be appropriately displaced with each other. The server apparatus 2 may issue only one of the terminal code and the transaction code.

The server apparatus 2 receives a registration request from the portable terminal 4. The registration request includes a terminal code and a commodity code read by the portable terminal 4. The server apparatus 2 that manages commodity information of each store reads commodity information corresponding to the commodity code included in the registration request received from the portable terminal 4 and registers the commodity information as a transaction target. In other words, the server apparatus 2 registers the commodity information as a part of the transaction information. The transaction information includes various types of information such as commodity information necessary for a customer to perform payment. The commodity information includes information such as a commodity name, a price, and highlight information. The highlight information is information indicating that the commodity is to be paid attention to when an attendant performs checking. In this way, the server apparatus 2 manages transaction information for each customer, in other words, each terminal code, in real time.

The server apparatus 2 transmits transaction information of the store where the attendant PC 6 is installed (hereinafter also referred to as "store transaction information") from all the managed transaction information to the attendant PC 6. The server apparatus 2 receives a store transaction information request from the attendant PC 6 periodically such as a short fixed time interval and transmits the store transaction information as a response to a store transaction information request. Accordingly, the attendant PC 6 can acquire transaction information in substantially real time. The attendant PC 6 manages a status of each customer based on the acquired transaction information. The server apparatus 2 itself may transmit the store transaction information to the attendant PC 6 whenever the transaction information for the store is updated. In this case, the attendant PC 6 may not need to transmit the store transaction information request.

The server apparatus 2 receives checking information from the attendant PC 6. The checking information is information indicating that an attendant completes checking of a commodity of which a barcode is scanned by a customer, that is, a commodity purchased by the customer, and includes transaction-specific information (a transaction code or a terminal code). In the following description, checking performed on a purchase commodity by an attendant is also referred to as "attendant checking" in some cases. The server apparatus 2 manages whether each transaction is an attendant-checked transaction by storing the terminal code, the transaction code, and the checking information in association.

The server apparatus 2 receives a transaction information request from the cash register 5. The transaction information request is a request for transaction information used for a customer to perform payment and includes a transaction code for specifying a transaction that is a payment target. When the transaction information request is received, the server apparatus 2 determines whether a transaction specified with the transaction code included in the transaction information request (hereinafter also referred to as a target transaction) is an attendant-checked transaction.

When the target transaction is an attendant-checked transaction, the server apparatus 2 transmits the transaction information of the target transaction to the cash register 5. When the target transaction is not the attendant-checked transaction, the server apparatus 2 transmits error information to the cash register 5 without transmitting the transaction information. The error information is information indicating that the target transaction is not the attendant-checked transaction. Accordingly, the server apparatus 2 enables payment by the customer on the cash register 5 under a condition that an attendant checking is performed in advance.

The server apparatus 2 may comprise a plurality of computers working in concert. In other words, functions of the server apparatus 2 may be distributed among the plurality of computers.

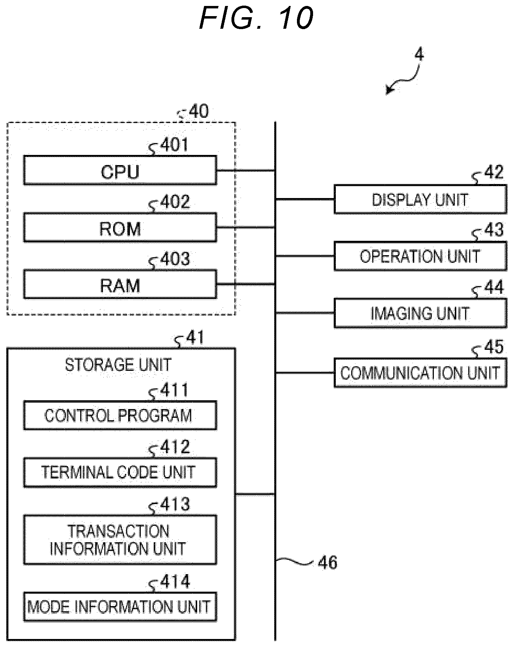

The portable terminal 4 is a portable terminal carried by the customer. In the present embodiment, the portable terminal 4 is a smartphone owned by the customer. In the portable terminal 4, an application program for the movable self-register system is installed. The portable terminal 4 images a commodity barcode by an imaging unit 44 (see FIG. 10) and reads a commodity code. The portable terminal 4 transmits and receives various types of information to and from the server apparatus 2.

The cash register 5 can be a so-called self-service-type cash register at which the customer herself or himself performs an operation. The cash register 5 includes a scanner unit capable of reading a code symbol such as a barcode or a 2-dimensional code. In the cash register 5, the scanner unit reads a transaction code from a checkout barcode (hereinafter also referred to as a checkout barcode) of a checkout screen displayed on the portable terminal 4. The cash register 5 transmits a transaction information request including the read transaction code to the server apparatus 2.

When the transaction information is received as a response to the transaction information request from the server apparatus 2, the cash register 5 performs a checkout process based on the transaction information. The checkout process is a process performed to pay a price of a commodity purchased by the customer. The checkout process is, for example, display of the transaction information, calculation of a change sum, defrayal of a change in cash settlement and is, for example, transmission and reception of various types of information to and from a settlement server of a settlement service provider in cashless settlement.

When error information is received from the server apparatus 2 as a response to a transaction information request, the cash register 5 displays the error information on its display unit or the like. The displayed error information is, for example, information indicating a situation in which payment cannot be performed since the attendant checking is not completed. The cash register 5 transmits and receives various types of information to and from the server apparatus 2.

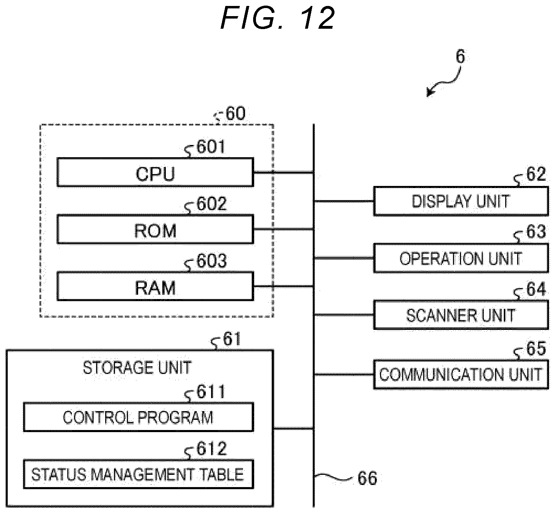

The attendant PC 6 is an information processing apparatus and the attendant terminal 6 is generally operated by a staff member such as an attendant. The attendant PC 6 includes a scanner unit 64 (see FIG. 12) capable of reading a code symbol. The attendant PC 6 reads a transaction code from a checkout barcode of an attendant checking screen displayed on the portable terminal 4 by the scanner unit 64. The attendant PC 6 acquires the transaction information corresponding to the read transaction code from the server apparatus 2 and displays the transaction information on a display unit 62 (see FIG. 12).

The attendant PC 6 can receive an input of a terminal code by the operation unit 63 instead of reading the transaction code by the scanner unit 64. The terminal code is displayed on the attendant checking screen of the portable terminal 4. Since a terminal code is associated with a transaction code in the server apparatus 2, the attendant PC 6 can also acquire the transaction information corresponding to the transaction code from the server apparatus 2 by transmitting the terminal code to the server apparatus 2. Accordingly, the attendant PC 6 can acquire transaction information necessary in a case of a failure of the scanner unit 64 or the like from the server apparatus 2.

The attendant performs attendant checking based on the transaction information displayed on the attendant PC 6. For example, when an age-restricted commodity is included in the transaction target, the attendant performs verification of an age of the customer. When an unregistered commodity is included in the transaction target, the unregistered commodity is verified. The unregistered commodity is a commodity of which commodity information corresponding to a commodity code is not registered in a commodity master due to a certain factor. When the attendant checking is completed, a checking completion input is performed on the attendant PC 6. When the checking completion input is performed, the attendant PC 6 transmits the checking information to the server apparatus 2.

After the attendant identifies an unregistered commodity, the attendant performs the checking completion input on the attendant PC 6 and then moves with the customer to a cash register 5 or a dedicated register. The attendant then operates the cash register 5 or the dedicated register to register the commodity information of the previously unregistered commodity as a part of the transaction.

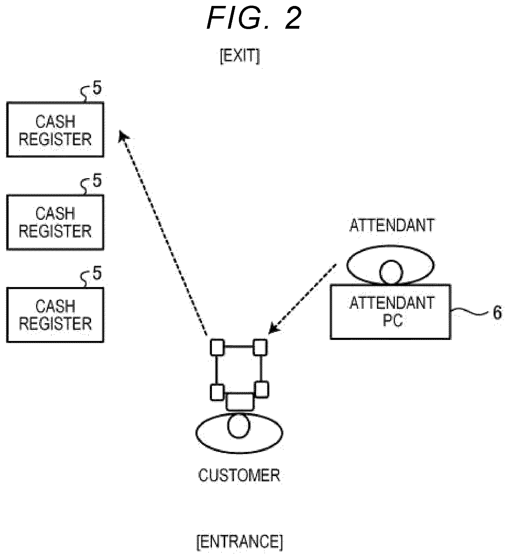

Here, operations in a store will be described with reference to FIG. 2. FIG. 2 is a diagram illustrating an example of a checkout area of a store. The checkout area is where at least one cash register 5 is disposed. A customer after completing commodity registration can make payment for the sales transaction by operating the cash register 5 by himself or herself. Near an entrance of the checkout area, in other words, along a route the customer must move to reach any cash register 5, an attendant and an attendant PC 6 (operated by the attendant) are disposed.

The customer presents the attendant checking screen (displayed on the portable terminal 4) to the attendant before payment at the cash register 5 can occur. The attendant then scans the checkout barcode (displayed on the attendant checking screen) with the scanner unit 64 of the attendant PC 6. The attendant PC 6 then acquires transaction information corresponding to the transaction code read from the checkout barcode from the server apparatus 2 and displays the acquired transaction information on the display unit 62. The attendant then performs checking (attendant checking) based on the now-displayed transaction information for the customer. The attendant performs a checking completion input operation on the attendant PC 6 after completing the appropriate attendant checking. Upon completion (the checking completion input operation) attendant PC 6 transmits the checking completion information to the server apparatus 2.

Once the attendant checking is completed, the customer can perform payment at any available cash register 5. If a customer who has not completed the attendant checking attempts to perform a payment at a cash register 5, error information will be displayed on the cash register 5 and the customer cannot perform the payment to complete the transaction. In this case, the customer must move to the attendant PC 6 for attendant checking. Since the attendant can perform the attendant checking for every customer without having to move from the place where the attendant PC 6 is installed, the checking work may be easier than requiring the attendant to go to each customer (cash register 5) separately.

Next, the server apparatus 2, the portable terminal 4, and the attendant PC 6 included in the transaction management system 1 will be described.

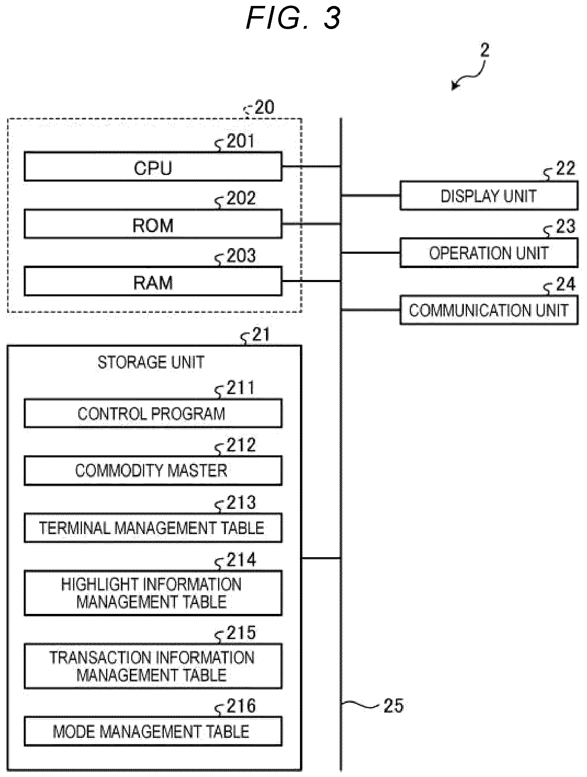

First, the server apparatus 2 will be described. FIG. 3 is a block diagram of the server apparatus 2. The server apparatus 2 includes a control unit 20, a storage unit 21, a display unit 22, an operation unit 23, and a communication unit 24. The control unit 20, the storage unit 21, the display unit 22, the operation unit 23, and the communication unit 24 are connected to each other via a bus 25 or the like.

The control unit 20 includes a central processing unit (CPU) 201, a read only memory (ROM) 202, and a random access memory (RAM) 203. The CPU 201, the ROM 202, and the RAM 203 are connected to each other via the bus 25.

The CPU 201 controls an operation of the entire server apparatus 2. The ROM 202 stores various types of data and various programs such as programs used to drive the CPU 201. The RAM 203 is used as a work area of the CPU 201, and various programs or various types of data stored in the ROM 202 or the storage unit 21 are loaded. The control unit 20 performs various control processes of the server apparatus 2 by causing the CPU 201 to operate in accordance with a control program stored in the ROM 202 or the storage unit 21 and loaded on the RAM 203.

The storage unit 21 can be a storage medium such as a hard disk drive (HDD) or a flash memory and retains storage content even if power is interrupted. The storage unit 21 stores a control program 211, a commodity master 212, a terminal management table 213, a highlight information management table 214, a transaction information management table 215, and a mode management table 216.

The control program 211 is a software program or the like for implementing a function of transmitting and receiving information to and from an external apparatus such as the portable terminal 4, the cash register 5, or the attendant PC 6, a function of managing the transaction information for each customer, a function of receiving a transaction information request and determining whether a the transaction (the target transaction) associated with the transaction information request is an attendant-checked transaction (a transaction requiring an attendant to perform a check before completion is possible), and the like.

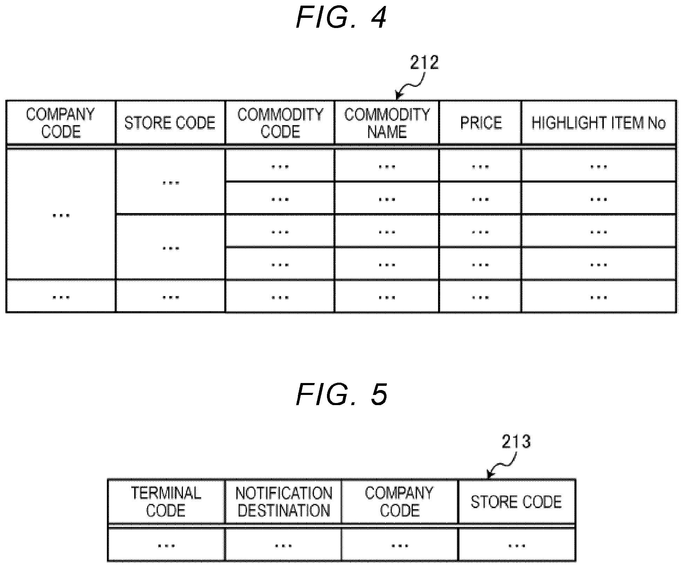

The commodity master 212 is a master file that stores information regarding commodities handled at each store. The commodity master 212 is updated based on information acquired from each store. Since the commodities at each store may be changed every day, the commodity master 212 may be appropriately updated by the store on a regular basis or as necessary. FIG. 4 is a diagram illustrating an example of a data configuration of a commodity master. In the commodity master 212, a company code, a store code, a commodity code, a commodity name, a price, and a highlight item number ("highlight item No") are stored in association.

The company code is information for specifying a particular company that administers the store where the transaction management system 1 is used. The store code is information for specifying a particular store where the transaction management system 1 is used. When the transaction management system 1 is used in a plurality of stores of the same company, a plurality of store codes may be associated with the same company code.

The commodity code is information for specifying a particular commodity. Since generally a plurality of commodities are sold at each store, a plurality of commodity codes will be associated with a store code. The commodity name entry is information indicating a name of the commodity. The price entry is information indicating the price of a commodity. The "highlight item No" entry is information for indicating the corresponding commodity is "a highlight item" that is to be paid particular attention to in the attendant checking process. The "highlight item No" entry may indicate a particular type of highlighting and may be set for any commodity which the attendant has to check carefully (referred to as a "highlight commodity"). The commodity name, the price, and the highlight item No entries are associated with a commodity code on a one-to-one basis (per commodity code basis).

The terminal management table 213 is a data table for managing the portable terminal 4 used for the movable self-register system 3. FIG. 5 is a diagram illustrating an example of a data configuration of the terminal management table 213. In the terminal management table 213, a terminal code, a notification destination, a company code, and a store code are stored in association.

The terminal code is information for specifying the portable terminal 4 using the transaction management system 1. When entry information is received from the portable terminal 4, the server apparatus 2 issues the terminal code for the portable terminal 4 and registers the terminal code in the terminal management table 213. As the terminal code, an identification number or the like of the portable terminal 4, such as an international mobile equipment identity (IMEI), may be adopted. By issuing a terminal code only for the transaction management system 1, it is possible to reduce the number of digits of the terminal code, and thus there is an advantage that it is easy to perform an operation when it is necessary to manually input the terminal code.

The notification destination is information indicating a notification destination of the portable terminal 4 and is a communication address of the portable terminal 4. The company code is information for specifying a company that administrates a store where the portable terminal 4 is present. The store code is information for specifying a store where there is the portable terminal 4. The notification destination, the company code, and the store code are registered based on the entry information received from the portable terminal 4. In the information registered in the terminal management table 213, information related to the terminal code of the customer completing transaction payment may be sequentially erased. In this case, since the same terminal code can be used multiple times, the number of digits of the terminal code to be used can be reduced.

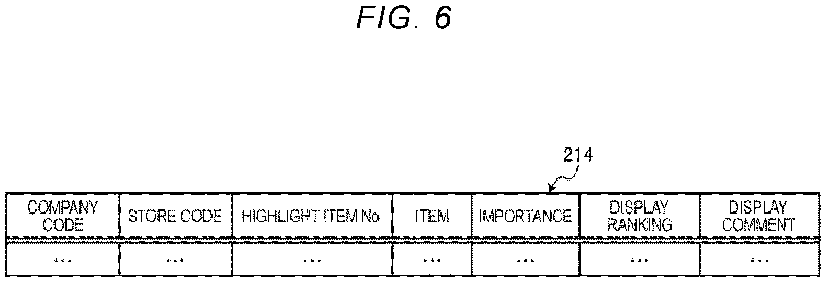

The highlight information management table 214 is a data table for managing highlight items in highlight commodities. The highlight information management table 214 is updated based on information acquired from each store. The attendant PC 6 displays a transaction detail screen based on information registered in the highlight information management table 214. FIG. 6 is a diagram illustrating an example of a data configuration of the highlight information management table 214. In the highlight information management table 214, the company code, the store code, the "highlight item No," an item entry, an importance level entry, a display ranking entry, and a display comment entry are stored in association.

The company code, the store code, and the "highlight item No" are as described above. The item entry is information indicating content of the highlight type and is, for example, information indicating an age-restricted commodity, an unregistered commodity, or the like. The importance level entry is information indicating an importance of the highlight item. For example, a value of "1" is registered for a highlight item considered to have high importance and a value of "0" is registered for a highlight item with low (or no) importance. The display ranking entry is information indicating the display ordering of commodity items on the transaction detail screen of the attendant PC 6. The display comment entry is information indicating a comment (or message) to be shown on the transaction detail screen of the attendant PC 6.

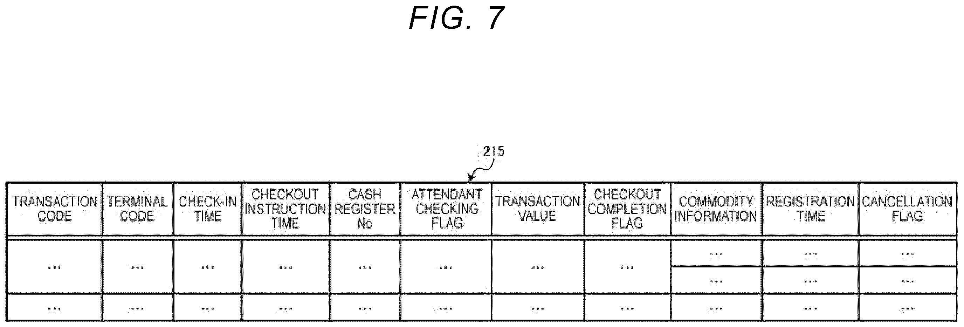

The transaction information management table 215 is a data table for managing transaction information of each store for each transaction at the store. The transaction information management table 215 is updated based on information from a portable terminal 4, a cash register 5, and/or an attendant PC 6. FIG. 7 is a diagram illustrating an example of a data configuration of the transaction information management table 215. In the transaction information management table 215, a transaction code entry, a terminal code entry, a check-in time entry, a checkout instruction time entry, a cash register number ("cash register No") entry, an attendant checking flag, a transaction amount entry, a checkout completion flag, commodity information entries, a registration time entry, and a cancellation flag are stored in association.

The transaction code entry is information for specifying a particular transaction. The terminal code entry is information for specifying a particular portable terminal 4. Whenever store entry information is received from a portable terminal 4, the server apparatus 2 issues a transaction code and a terminal code and registers the transaction code and the terminal code in the transaction information management table 215. The check-in time entry is information indicating a time at which the customer enters the store, for example, a time at which the server apparatus 2 receives the entry information from the portable terminal 4.

The checkout instruction time entry is information indicating a time at which the server apparatus 2 receives a checkout instruction from the portable terminal 4. The "cash register No" entry is information for specifying the particular cash register 5 at which a checkout process for the transaction of a corresponding transaction code was performed. In other words, the "cash register No" entry is information for specifying the cash register 5 that reads the transaction code from a checkout screen of the portable terminal 4. The "cash register No" can be registered based on receiving of a transaction information request from a cash register 5.

The attendant checking flag is information indicating whether the attendant checking is completed. When the attendant checking is completed, a value of " 1" is registered, and when the attendant checking is not completed, a value of "0" is registered. The attendant checking flag can be rewritten to "1" from "0" based on the checking information acquired from the attendant PC 6. The attendant checking flag for which "1" is registered is an example of the checking completion information registered once the attendant checking is completed.

The transaction amount entry is information indicating a total amount due for commodities (sum of commodity prices) in the transaction. The checkout completion flag is information indicating whether payment for the transaction is completed, in other words, whether a checkout process at a cash register 5 has been completed. In the checkout completion flag, a value of "1" is registered when the payment is completed, and a value of "0" is registered when the payment is not yet completed. The checkout completion flag is rewritten to "1" from "0" based on a checkout completion notification being acquired from a cash register 5.

The commodity information entry is information indicating a commodity code, a commodity name, and a price for the corresponding commodity. When a plurality of commodities are purchased in one transaction, a plurality of pieces of commodity information (list items) are registered to correspond to the same transaction code. The registration time entry is information indicating a time at which the commodity information was registered. The cancellation flag is information indicating whether corresponding commodity information has been deleted (cancelled from the transaction). A value of "1" is registered when commodity information has been deleted (cancelled), and a value of "0" is registered when the commodity information has not been deleted. The cancellation flag is rewritten to "1" from "0" based on cancellation information being received from a portable terminal 4. In this context, cancellation information is information giving an instruction to cancel a commodity registration and includes a commodity code of the item (commodity) to be cancelled from the transaction (the cancelled item is also referred to as a commodity registration cancellation target).

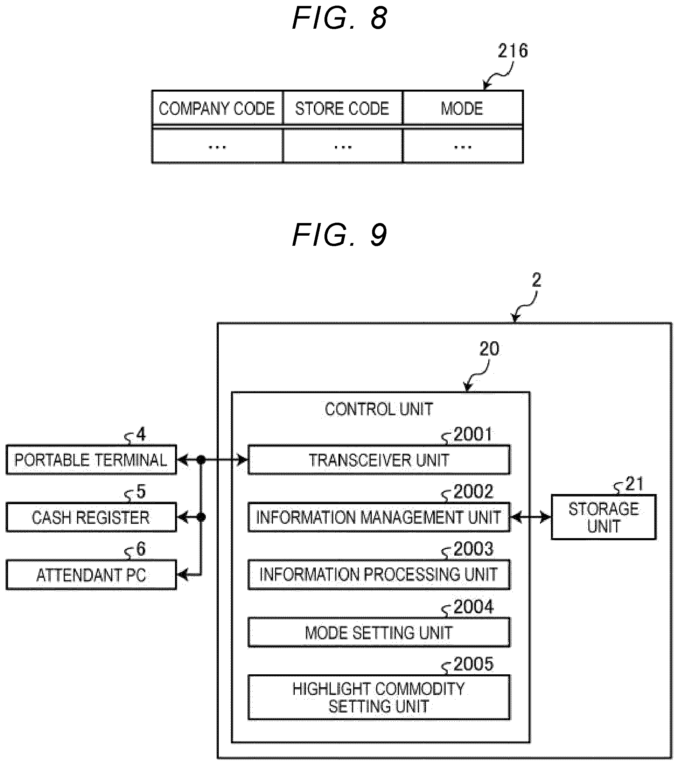

The mode management table 216 is a data table for managing a mode (operating mode) that has been set for the movable self-register system 3 for each store. The mode management table 216 can be updated based on information acquired from each store. FIG. 8 is a diagram illustrating an example of a data configuration of the mode management table 216. In the mode management table 216, entries for a company code, a store code, and a mode (a mode designation) are stored in association.

As described above, the company code is information for specifying the company administering a store and the store code is information for specifying the store. The mode designation is information indicating the mode that has been set for the movable self-register system 3. In this context, the mode designation may be either for a front checking mode or a normal mode.

The front checking mode is an operating mode in which attendant checking is performed before a customer performs payment at the cash register 5, as described in FIG. 2. Specifically, the front checking mode enables a customer to perform payment at the cash register 5 only after notice is received that the attendant checking is completed. The normal mode is an operating mode corresponding to that of the related art. Specifically, the normal mode a customer can perform payment at the cash register 5 even though notice that the attendant checking has been completed has not been received. That is, in the normal mode, attendant checking occurs after checkout (payment) at the cash register 5 has begun rather than before. Each store can select between the front checking mode or the normal mode in accordance with its administration preferences.

Referring back to FIG. 3, the hardware configuration of the server apparatus 2 will be described.

The display unit 22 is configured by, for example, a liquid crystal panel and displays various types of information. The display unit 22 displays, for example, information stored in the commodity master 212, the terminal management table 213, the highlight information management table 214, the transaction information management table 215, and the mode management table 216 as necessary.

The operation unit 23 is a unit that inputs information to the control unit 20 and is configured by, for example, a keyboard, a touch panel, a mouse, or the like.

The communication unit 24 is an interface for communication with an external apparatus such as the portable terminal 4, the cash register 5, or the attendant PC 6. The control unit 20 is connected to the external apparatus via the communication unit 24 so that information (data) can be transmitted to and received from the external apparatus.

Next, functional aspects of the server apparatus 2 will be described. FIG. 9 is a block diagram illustrating certain aspects of the control unit 20 of the server apparatus 2. The control unit 20 functions as a transceiver unit 2001, an information management unit 2002, an information processing unit 2003, a mode setting unit 2004, and a highlight commodity setting unit 2005 by causing the CPU 201 to operate in accordance with a control program stored in the ROM 202 or the storage unit 21. These functions may be configured as hardware such as a dedicated circuit.

The transceiver unit 2001 transmits and receives various types of information to and from the portable terminal 4, the cash register 5, and the attendant PC 6. For example, the transceiver unit 2001 receives entry information from the portable terminal 4 and transmits the terminal code, the transaction code, and the mode information to the portable terminal 4.

The transceiver unit 2001 receives a registration request including the terminal code and the commodity code from the portable terminal 4 and transmits commodity information registered, as a response to the registration request, to the portable terminal 4. The transceiver unit 2001 receives a checkout instruction including a transaction code from the portable terminal 4 and transmits a transaction amount of a transaction specified by the transaction code and an attendant checking screen display instruction to the portable terminal 4. The checkout instruction is any information indicating that the commodity registration phase of a transaction ends. The attendant checking screen display instruction is information instructing the portable terminal 4 to display a checkout barcode to be read by the attendant PC 6. The transaction amount may be calculated by the portable terminal 4.

The transceiver unit 2001 receives a store transaction information request including a store code from the attendant PC 6 periodically in a short time interval and transmits transaction information of a store specified with the store code as a response to the store transaction information request. Accordingly, the attendant PC 6 can acquire transaction information in substantially real time.

The transceiver unit 2001 receives the checking information from the attendant PC 6. The checking information is information indicating that the attendant checking is completed and includes transaction-specific information (a transaction code or a terminal code). The transceiver unit 2001 transmits a checkout screen display instruction to the portable terminal 4 of a customer completing the attendant checking based on the received checking information. The checkout screen display instruction is any information for instructing the portable terminal 4 to display a checkout barcode to be read by the cash register 5.

The transceiver unit 2001 receives a transaction information request including a transaction code from the cash register 5 and transmits transaction information specified with the transaction code as a response to the transaction information request. The transceiver unit 2001 functions as an example of a request reception unit that receives the transaction information request. The transceiver unit 2001 functions as an example of an output unit that outputs the transaction information. The transceiver unit 2001 receives a checkout completion notification from the cash register 5. The checkout completion notification is information indicating that payment related to the transaction is completed and includes the transaction code.

The information management unit 2002 manages various types of information such as information received by the transceiver unit 2001. Here, it is assumed that the management of the information is writing or reading of various types of information (data) in the storage unit 21.

For example, when the transceiver unit 2001 receives entry information, the information management unit 2002 writes a terminal code or a transaction code to the terminal management table 213 or the transaction information management table 215. When the transceiver unit 2001 receives the entry information, the information management unit 2002 reads mode information corresponding to the store code included in the entry information from the mode management table 216.

When the transceiver unit 2001 receives a registration request, the information management unit 2002 registers commodity information corresponding to the commodity code included in the registration request in the transaction information management table 215. Specifically, the information management unit 2002 reads a company code and a store code corresponding to the terminal code included in the registration request with reference to the terminal management table 213. The information management unit 2002 reads commodity information corresponding to the commodity code associated with the company code and the store code and included in the registration request from the commodity master 212 and registers the commodity information in the transaction information management table 215. The information management unit 2002 functions as an example of a registration unit that performs commodity registration.

When the transceiver unit 2001 receives a store transaction information request, the information management unit 2002 extracts transaction information of a store specified with the store code included in the store transaction information request. Specifically, the information management unit 2002 reads all terminal codes corresponding to the store code from the terminal management table 213. The information management unit 2002 reads all transaction information corresponding to the read terminal codes from the transaction information management table 215.

When the transceiver unit 2001 receives the transaction information request, the information management unit 2002 reads transaction information specified with a transaction code included in the transaction information request. When the transceiver unit 2001 receives checking information, the information management unit 2002 rewrites an attendant checking flag corresponding to transaction-specific information (a transaction code or a terminal code) included in the checking information to "1" in the transaction information management table 215. The information management unit 2002 writes or reads other information in the storage unit 21 as necessary.

As described above, the information management unit 2002 is an example of a transaction management unit that manages the transaction information management table 215 in which transaction-specific information (a transaction code or a terminal code), transaction information, and checking completion information (attendant checking flag) are stored in association.

The information processing unit 2003 performs various types of information processing. For example, the information processing unit 2003 calculates a transaction amount of one transaction. The information processing unit 2003 performs a process of allocating a transaction code or a terminal code and issues the transaction code or the terminal code. The information processing unit 2003 determines whether a transaction is an attendant-checked transaction with reference to the transaction information management table 215.

The mode setting unit 2004 sets a mode of the movable self-register system 3 of each store to either the front checking mode or the normal mode. Specifically, based on the information acquired from the store, the mode setting unit 2004 registers information indicating the front checking mode or the normal mode in the mode management table 216.

The highlight commodity setting unit 2005 sets a highlight commodity among commodities registered in the commodity master 212. Specifically, based on the information acquired from the store, the highlight commodity setting unit 2005 registers information related to the highlight commodity in the commodity master 212 and the highlight information management table 214.

Next, details of the portable terminal 4 will be described. FIG. 10 is a block diagram of the portable terminal 4. The portable terminal 4 includes a control unit 40, a storage unit 41, a display unit 42, an operation unit 43, the imaging unit 44, and a communication unit 45. The control unit 40, the storage unit 41, the display unit 42, the operation unit 43, the imaging unit 44, and the communication unit 45 are connected to each other via a bus 46 or the like.

The control unit 40 includes a CPU 401, a ROM 402, and a RAM 403. The CPU 401, the ROM 402, and the RAM 403 are connected to each other via the bus 46.

The CPU 401 controls an operation of the entire portable terminal 4. The ROM 402 stores various types of data and various programs such as programs used to drive the CPU 401. The RAM 403 is used as a work area of the CPU 401, and various programs or various types of data stored in the ROM 402 or the storage unit 41 are loaded. The control unit 40 performs various control processes of the portable terminal 4 by causing the CPU 401 to operate in accordance with a control program stored in the ROM 402 or the storage unit 41 and loaded on the RAM 403.

The storage unit 41 can be a storage medium such as a HDD or a flash memory and retains storage content even if power is interrupted. The storage unit 41 stores a control program 411, a terminal code unit 412, a transaction information unit 413, and a mode information unit 414.

The control program 411 is an application program or the like for the movable self-register system. The application program or the like for the movable self-register system causes the portable terminal 4 to function as a commodity registration input device. The application program or the like for the movable self-register system causes the portable terminal 4 to function as a checkout barcode display device.

The terminal code unit 412 stores a terminal code received from the server apparatus 2. The terminal code is issued by the server apparatus 2 in accordance with entry information from the portable terminal 4.

The transaction information unit 413 stores transaction information in which the transaction code received from the server apparatus 2 is associated with the commodity information registered in the server apparatus 2. Specifically, in the transaction information unit 413, commodity information registered by the server apparatus 2 is sequentially registered in association with a transaction code.

The mode information unit 414 stores mode information received from the server apparatus 2. The mode information unit 414 stores the mode information received from the server apparatus 2 to correspond to the entry information from the portable terminal 4. The mode information is information indicating a mode of the movable self-register system 3 of a store where the portable terminal 4 is present.

When the portable terminal 4 receives a checkout completion notification from the server apparatus 2, information stored in the terminal code unit 412, the transaction information unit 413, and the mode information unit 414 is cleared. The terminal code unit 412, the transaction information unit 413, and the mode information unit 414 store new information for each transaction.

The display unit 42 is configured by, for example, a liquid crystal panel and displays various types of information. The display unit 42 displays, for example, commodity information of a commodity registered in the server apparatus 2 or a total amount of registered commodities. The display unit 42 displays an attendant checking screen or a checkout screen. In the attendant checking screen or the checkout screen, a checkout barcode to be read by the attendant PC 6 or the cash register 5 is displayed.

The operation unit 43 is configured by, for example, a touch panel provided on the surface of the display unit 42 and inputs information in accordance with a position touched by a user to the control unit 40. When a customer selects (presses) a button, icon, or the like displayed on the display unit 42, the operation unit 43 inputs information corresponding to the selected button, icon, or the like to the control unit 40.

The imaging unit 44 images a 2-dimensional code, a commodity barcode, or the like. The 2-dimensional code may be displayed at an entrance of a store or the like. The image unit sends data of a captured image (or a moving image or video) (hereinafter also referred to as captured data) to the control unit 40. The control unit 40 can read store information from the image of a 2-dimensional code and a commodity code from the image of a commodity barcode. When the portable terminal 4 operates to recognize (obtain) a commodity code through so-called object recognition, the imaging unit 44 images of the commodity and sends the captured image(s) to the control unit 40.

The communication unit 45 is an interface for communication with an external apparatus such as the server apparatus 2. The control unit 40 is connected to the external apparatus via the communication unit 45 so that information (data) can be transmitted to and received from the external apparatus.

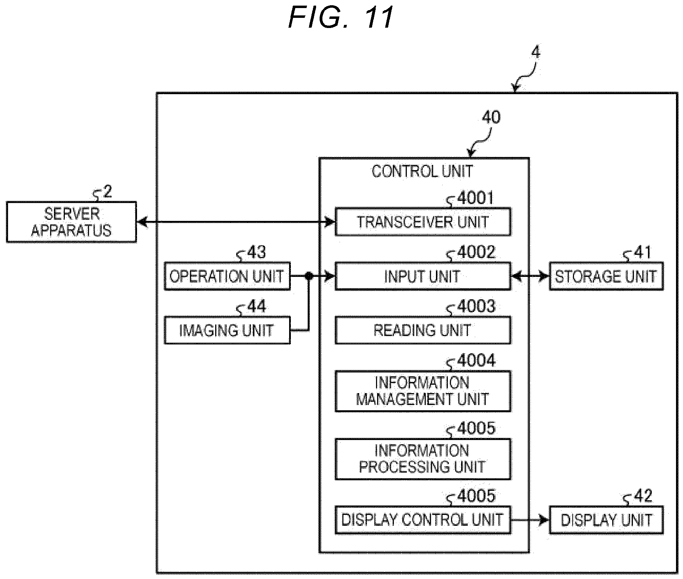

Next, functional aspects of the control unit 40 of the portable terminal 4 will be described. FIG. 11 is a block diagram illustrating certain aspects of the control unit 40 of the portable terminal 4. The control unit 40 functions as a transceiver unit 4001, an input unit 4002, a reading unit 4003, an information management unit 4004, an information processing unit 4005, and a display control unit 4006 by causing the CPU 401 to operate in accordance with a control program stored in the ROM 402 or the storage unit 41. These functions may be configured as hardware such as a dedicated circuit.

The transceiver unit 4001 transmits and receives various types of information to and from the server apparatus 2. For example, the transceiver unit 4001 transmits entry information to the server apparatus 2 and receives a terminal code, a transaction code, and mode information from the server apparatus 2.

The transceiver unit 4001 transmits a registration request including the terminal code and the commodity code to the server apparatus 2 and receives commodity information and a transaction amount registered, as a response to the registration request, from the server apparatus 2. The transceiver unit 4001 transmits a checkout instruction including the transaction code to the server apparatus 2 and receives a transaction amount of a transaction specified with the transaction code and an attendant checking screen display instruction from the server apparatus 2. The transceiver unit 4001 receives a checkout screen display instruction and a checkout completion notification from the server apparatus 2.

Various types of information are input from the operation unit 43 and the imaging unit 44 to the input unit 4002. For example, a transaction start instruction or a checkout instruction are input from the operation unit 43 to the input unit 4002. Captured data of a 2-dimensional code displayed at an entrance of a store, captured data of a commodity barcode, and the like are input from the imaging unit 44 to the input unit 4002.

The reading unit 4003 extracts the 2-dimensional code from the captured data input to the input unit 4002 and decodes the 2-dimensional code to read store information. The reading unit 4003 extracts the commodity barcode from the captured data input to the input unit 4002 and decodes the commodity barcode to read the commodity code. The 2-dimensional code or the commodity barcode may be decoded by the server apparatus 2. In this case, the transceiver unit 4001 transmits the captured data of the 2-dimensional code or the barcode to the server apparatus 2 and receives the store information or the commodity code read by the server apparatus 2 from the server apparatus 2.

The information management unit 4004 manages various types of information such as information received by the transceiver unit 4001. Here, it is assumed that the management of the information is writing or reading of various types of information (data) in the storage unit 41.

For example, the information management unit 4004 writes the terminal code received by the transceiver unit 4001 in the terminal code unit 412. The information management unit 4004 writes the transaction code and the commodity information received by the transceiver unit 4001 in the transaction information unit 413. Specifically, when the transceiver unit 4001 receives a transaction code, the information management unit 4004 writes the transaction code in the transaction information unit 413. Whenever the transceiver unit 4001 receives commodity information registered in the server apparatus 2, the commodity information is written in the transaction information unit 413 in association with the transaction code. The information management unit 4004 writes the mode information received by the transceiver unit 4001 in the mode information unit 414.

The information processing unit 4005 performs various types of information processing. For example, when the transceiver unit 4001 receives an attendant checking screen display instruction from the server apparatus 2, the information processing unit 4005 generates a checkout barcode to be displayed on the display unit 42.

The display control unit 4006 causes the display unit 42 to display various types of information. For example, the display control unit 4006 causes the display unit 42 to display the commodity information and the transaction amount stored in the transaction information unit 413. The transaction amount may be acquired from the server apparatus 2 or may be calculated by the information processing unit 4005 based on the transaction information stored in the transaction information unit 413.

When information indicating the front checking mode is registered in the mode information unit 414 and the information processing unit 4005 generates a checkout barcode, the display control unit 4006 causes the display unit 42 to display an attendant checking screen. When the transceiver unit 4001 receives a checkout screen display instruction, the display control unit 4006 causes the display unit 42 to display a checkout screen.

When information indicating the normal mode is registered in the mode information unit 414 and a checkout barcode is generated by the information processing unit 4005, the display control unit 4006 causes the display unit 42 to display a checkout screen without displaying the attendant checking screen. The details of the attendant checking screen and the checkout screen will be described below.

Next, details of the attendant PC 6 will be described. FIG. 12 is a block diagram illustrating of the attendant PC 6. The attendant PC 6 includes a control unit 60, a storage unit 61, a display unit 62, an operation unit 63, a scanner unit 64, and a communication unit 65. The control unit 60, the storage unit 61, the display unit 62, the operation unit 63, the scanner unit 64, and the communication unit 65 are connected to each other via a bus 66 or the like.

The control unit 60 includes a CPU 601, a ROM 602, and a RAM 603. The CPU 601, the ROM 602, and the RAM 603 are connected to each other via the bus 66.

The CPU 601 controls operation of the entire attendant PC 6. The ROM 602 stores various types of data and various programs such as programs used to drive the CPU 601. The RAM 603 is used as a work area of the CPU 601, and various programs or various types of data stored in the ROM 602 or the storage unit 61 are loaded. The control unit 60 performs various control processes of the attendant PC 6 by causing the CPU 601 to operate in accordance with a control program stored in the ROM 602 or the storage unit 61 and loaded on the RAM 603.

The storage unit 61 can be a storage medium such as a HDD or a flash memory and retains storage content even if power is interrupted. The storage unit 61 stores a control program 611 and a status management table 612.

The control program 611 is a program or the like for implementing a function of transmitting and receiving information to and from the server apparatus 2, a function of managing a status of a customer in a store, and the like.

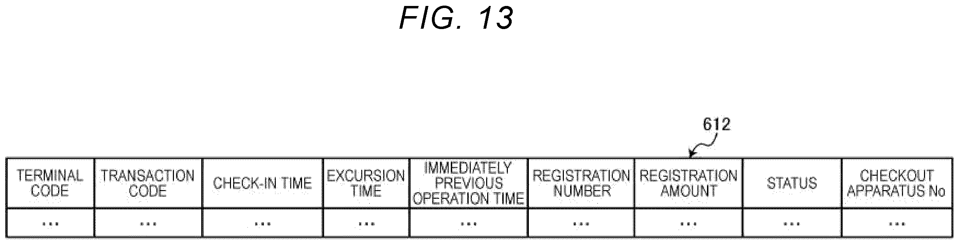

The status management table 612 is a data table for managing a status of a customer who does not complete payment. The status management table 612 is updated at any time based on information acquired from the server apparatus 2. FIG. 13 is a diagram illustrating an example of a data configuration of the status management table 612. In the status management table 612, a terminal code, a transaction code, a check-in time, an excursion time, an immediately previous operation time, a registration number, a registration amount, a status, and a checkout apparatus No are stored in association.

As described above, the transaction code is information for specifying a transaction and the terminal code is information for specifying the portable terminal 4. The check-in time is information indicating a time at which a customer enters the store. The excursion time is an elapsed time after the customer enters the store and is calculated in accordance with a present time and the check-in time. The immediately previous operation time is information indicating a time at which the customer operates the portable terminal 4 immediately previously. Specifically, the immediately previous operation time is information, such as a check-in time, a registration time, a checkout instruction time, indicating a time at which an operation was last performed previously.

The registration number is information indicating the number of registered commodities. The registration amount is information indicating a total amount of registered commodities. The registration amount has the same meaning as the transaction amount and may be a price including tax or a price excluding tax. The status is an example of state information indicating a state of the customer. In the status, a status before checkout, such as "shopping" is registered. "Shopping" indicates that one or more commodities are registered and a checkout instruction is not input to the portable terminal 4. In the status, a "during checkout" or "checkout completion" state may be registered. The "during checkout" state indicates that a checkout instruction is input to the portable terminal 4 and payment is not completed. The "checkout completion" indicates that payment is completed. The checkout apparatus No is information for specifying the cash register 5 that is performing a checkout process of a corresponding transaction No.

Referring back to FIG. 12, a hardware configuration of the attendant PC 6 will be described.

The display unit 62 is configured by, for example, a liquid crystal panel and displays various types of information. For example, the display unit 62 displays a transaction list screen, a transaction detail screen, a guidance screen, and a highlight setting screen. The transaction list screen is a screen on which statuses of customers are listed and displayed. The transaction detail screen is a screen on which details of transactions of the customer are displayed. The guidance screen is a screen on which a guidance for an attendant in attendant checking is displayed. The highlight setting screen is a screen on which a highlight commodity is set. These screens will be described below.

The operation unit 63 is a unit that inputs information to the control unit 60 and is configured by, for example, a keyboard, a touch panel, a mouse, or the like. For example, the operation unit 63 inputs information for setting a mode of the movable self-register system 3 or information for setting a highlight commodity to the control unit 60.

The scanner unit 64 reads a code symbol such as a barcode or a 2-dimensional code. For example, the scanner unit 64 scans a checkout barcode displayed on the attendant checking screen of the portable terminal 4 and inputs scanned data to the control unit 60. The scanner unit 64 may be configured as an imaging unit that captures an image. In this case, the scanner unit 64 inputs captured data to the control unit 60.

The communication unit 65 is an interface for communication with an external apparatus such as the server apparatus 2. The control unit 60 is connected to the external apparatus via the communication unit 65 so that information (data) can be transmitted to and received from the external apparatus.

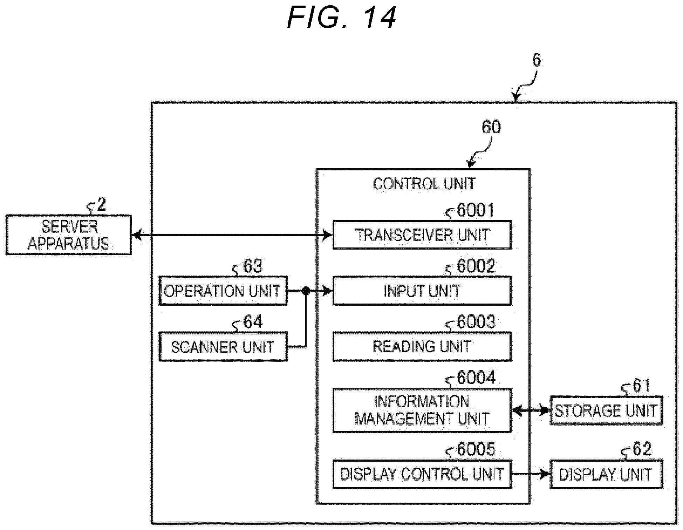

Next, functional aspects of the control unit 60 of the attendant PC 6 will be described. FIG. 14 is a block diagram illustrating certain aspects of the control unit 60 of the attendant PC 6. The control unit 60 functions as a transceiver unit 6001, an input unit 6002, a reading unit 6003, an information management unit 6004, and a display control unit 6005 by causing the CPU 601 to operate in accordance with a control program stored in the ROM 602 or the storage unit 61. These functions may be configured as hardware such as a dedicated circuit.

The transceiver unit 6001 transmits and receives various types of information to and from the server apparatus 2. For example, the transceiver unit 6001 transmits a store transaction information request including a store code to the server apparatus 2 and receives transaction information corresponding to the store code as a response to the store information request. The transceiver unit 6001 transmits a transaction information request including a transaction code to the server apparatus 2 and receives transaction information corresponding to the transaction code as a response to the transaction information request. The transceiver unit 6001 transmits checking information to the server apparatus 2.

The transceiver unit 6001 transmits various types of setting information to the server apparatus 2. For example, the transceiver unit 6001 transmits mode setting formation of the movable self-register system 3 to the server apparatus 2. The transceiver unit 6001 transmits setting information for setting a highlight commodity to the server apparatus 2. The attendant PC 6 may transmit and receive information to and from the server apparatus 2 by a function of a dedicated application program or may transmit and receive information to and from the server apparatus 2 by accessing a web site using a browser.

Various types of information are input from the operation unit 63 and the scanner unit 64 to the input unit 6002. The input unit 6002 functions as an example of a reception unit that receive various input operations. In this context, an input operation includes reading a code symbol using the scanner unit 64 and is not limited to operations performed through the operation unit 63. For example, checking completion information can be input from the operation unit 43 to the input unit 6002. The checking completion information is information indicating that attendant checking is completed. Scanned data of a checkout barcode displayed on the attendant checking screen may be input from the scanner unit 64 to the input unit 6002.

The reading unit 6003 decodes the scanned data to read a transaction code. The scanned data may be decoded by the server apparatus 2 in some examples. In this case, the transceiver unit 6001 transmits the scanned data to the server apparatus 2 and receives the transaction code as read (decoded) by the server apparatus 2.

The information management unit 6004 manages various types of information such as information received by the transceiver unit 6001. Here, it is assumed that the management of the information includes writing or reading of various information (data) to or from the storage unit 61.

For example, the information management unit 6004 writes information necessary for the status management table 612 based on transaction information of a store when received by the transceiver unit 6001. The information management unit 6004 reads information to be displayed on the display unit 62 from the status management table 612 as necessary.

The display control unit 6005 causes the display unit 62 to display various types of information. The display control unit 6005 may function as examples of first and second display units. For example, the display control unit 6005 can cause the display unit 62 to display a transaction list screen, a transaction detail screen, a guidance screen, and a highlight setting screen. The transaction list screen, the transaction detail screen, the guidance screen, and the highlight setting screen can be screens displayed according to an assessing of a web site supplied by the server apparatus 2.

An example configuration of the cash register 5 is described above, but a cash register 5 can comprise a computer including a CPU, a ROM, a RAM such as the configuration of the server apparatus 2, the portable terminal 4, and/or the attendant PC 6 described above. The cash register 5 can also include a storage unit such as an HDD or a flash memory that stores various programs, display device such as a liquid crystal panel, an operation unit comprising an input device such as a keyboard or a touch panel, a scanner unit similar to the scanner unit 64, and a communication unit for communicating with an external apparatus. The control unit of the cash register 5 performs various processes such as an attendant checking determination process by execution of a program stored in the storage unit or the like. The control unit of the cash register 5 can implement functions of a reception unit and a checkout processing unit by execution of a program stored in the storage unit or the like.

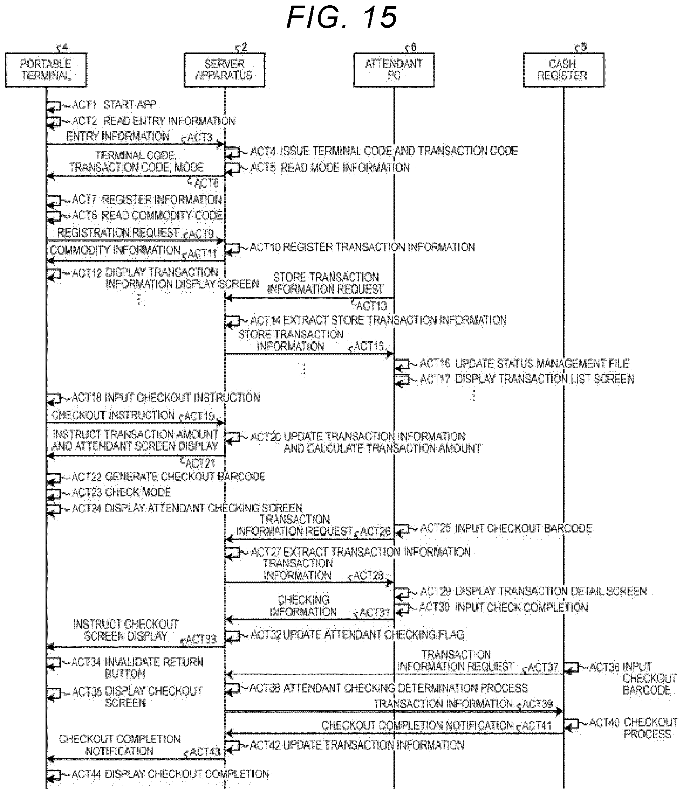

Next, an overview of operations of the transaction management system 1 will be described. FIG. 15 is a sequence chart illustrating an example of an operation of the transaction management system 1. The sequence chart indicates an operation after a mode of the movable self-register system 3 has been set to the front checking mode. The sequence chart thus indicates an operation when a customer receives an attendant checking before payment at the cash register 5.

The customer starts an application program for the movable self-register system (ACT 1). Subsequently, the customer reads the entry information with the portable terminal 4 and performs an input to start a transaction (ACT 2). The portable terminal 4 transmits the entry information including a company code, a store code, and a check-in time to the server apparatus 2 (ACT 3).

The server apparatus 2 issues the terminal code and the transaction code (ACT 4). At this time, the server apparatus 2 registers necessary information to the terminal management table 213 and the transaction information management table 215 based on the received entry information. The server apparatus 2 reads the mode information of the store code included in the entry information from the mode management table 216 (ACT 5). The server apparatus 2 transmits the issued terminal code and transaction code and the read mode information to the portable terminal 4 (ACT 6).

The portable terminal 4 registers the received information (ACT 7). Specifically, the portable terminal 4 registers the received terminal code in the terminal code unit 412, registers the transaction code in the transaction information unit 413, and registers the mode information in the mode information unit 414. When the customer images the commodity barcode with the imaging unit 44, the portable terminal 4 reads the commodity code for specifying the commodity (ACT 8). The commodity code of the commodity to which no barcode is attached is input from the operation unit 43. The portable terminal 4 transmits a registration request including the terminal code and the commodity code to the server apparatus 2 (ACT 9). The portable terminal 4 may transmit a registration request including the transaction code together with the terminal code or instead of the terminal code to the server apparatus 2. In the following description, the portable terminal 4 is assumed to transmit the terminal code together when the information is transmitted to the server apparatus 2.

The server apparatus 2 performs commodity registration in response to the registration request. Specifically, the server apparatus 2 reads the commodity information corresponding to the commodity code included in the registration request from the commodity master 212 and registers the commodity information in the transaction information management table 215 (ACT 10). The server apparatus 2 transmits the read commodity information to the portable terminal 4 (ACT 11).

The portable terminal 4 stores the received commodity information in the transaction information unit 413 and displays a transaction information display screen (ACT 12). Whenever the commodity code is read, the portable terminal 4 may acquire the transaction information including all the commodity information regarding this transaction and registered in the transaction information management table 215 by the server.

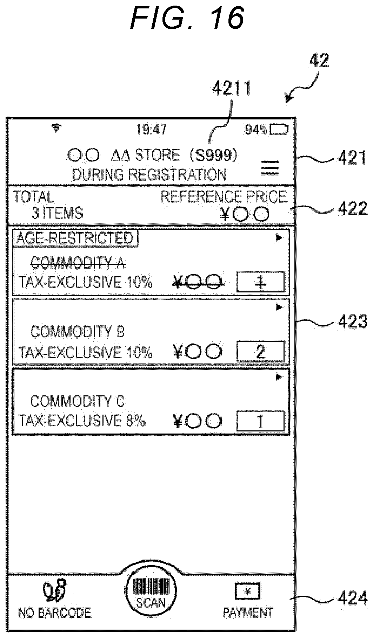

Here, the transaction information display screen will be described. FIG. 16 is a diagram illustrating an example of a transaction information display screen displayed by the portable terminal 4. The display unit 42 of the portable terminal 4 displays a header portion 421, a sum information portion 422, a commodity information portion 423, and a footer portion 424 on the transaction information display screen.

In the header portion 421, a company name "00", a store name "ΔΔ Store", text "during registration" indicating that the customer is doing shopping, and the like are displayed. A terminal code portion 4211 is formed in the header portion 421. In the terminal code portion 4211, a terminal code is displayed.

In the sum information portion 422, a total number of registered commodities and a total amount are displayed. After the commodity registration is performed once, a commodity for which the commodity registration was deleted is not included in the total number and the total amount.

In the commodity information portion 423, information regarding the registered commodities and the commodity of which the commodity registration is deleted is displayed. The displayed information regarding the commodities is a commodity name, a price, a tax rate, the number of commodities, and additional information. The additional information is information indicating an age-restricted commodity, or the like and is set with no relation with a highlight commodity. For the commodity of which the commodity registration is deleted, a cancellation line is added to a commodity name, a price, and the number of commodities.

In the footer portion 424, various operators are displayed. Specifically, in the footer portion 424, an icon of "no barcode", an icon of "scan", and an icon "payment" are displayed. The icon of "no barcode" is an icon for displaying a preset screen for commodity registration of a commodity to which a commodity barcode is not attached. The icon of "scan" is an icon for imaging a commodity barcode. The icon of "payment" is an icon for inputting a checkout instruction.

Referring back to FIG. 15, the overview of the operation of the transaction management system 1 will be described.

Whenever the customer images a barcode attached to a commodity, the processes of ACTs 8 to 12 are repeated. The attendant PC 6 transmits a store transaction information request to the server apparatus 2 (ACT 13). The store transaction information request is made as the process of ACT 13 to facilitate the description, but is output to the server apparatus 2 repeatedly in a short time independently of other processes. In other words, the store transaction information request is transmitted to the server apparatus 2 substantially all the time.

When the server apparatus 2 receives the store transaction information request, the server apparatus 2 extracts transaction information associated with the store code included in the store transaction information request as store transaction information from the transaction information management table 215 (ACT 14). The server apparatus 2 transmits the extracted store transaction information to the attendant PC 6 (ACT 15).

The attendant PC 6 updates the status management table 612 based on the received store transaction information (ACT 16). The attendant PC 6 displays the transaction list screen on the display unit 62 based on the information stored in the status management table 612 (ACT 17). As described above, since the store transaction information request is transmitted to the server apparatus 2 repeatedly in a short time interval, processes of ACTs 14 to 17 performed in conjunction with the store transaction information request are performed repeatedly. Accordingly, the transaction list screen is updated automatically.

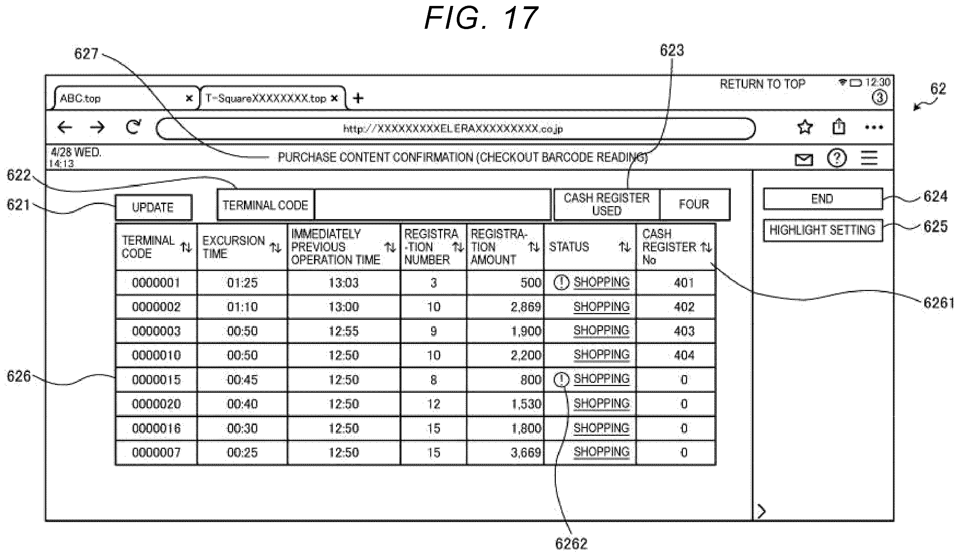

Here, the transaction list screen will be described. FIG. 17 is a diagram illustrating an example of a transaction list screen displayed by the attendant PC 6. The display unit 62 of the attendant PC 6 displays an update button 621, a terminal code input field 622, a use cash register display portion 623, an end button 624, a highlight setting button 625, and a status display portion 626 on the transaction list screen.

The update button 621 is for manually updating information displayed in the status display portion 626. The terminal code input field 622 is an input field for inputting a terminal code and displaying a transaction detail screen related to the terminal code. The terminal code input field 622 is utilized, for example, when the scanner unit 64 malfunctions and a checkout barcode cannot be read. The use cash register display portion 623 displays the number of cash registers 5 that are being used.

The end button 624 is for ending of the transaction list display. Any screen can be set by the store to be displayed after the end button 624 is pressed. The highlight setting button 625 is for transitioning to the highlight setting screen.

The status display portion 626 displays of a list of statuses of customers for each terminal code. Specifically, in the status display portion 626, items of a terminal code, an excursion time, an immediately previous operation time, a registration number, a registration amount, a status, and a checkout apparatus No are displayed in association. Content of each item is the content described in the status management table 612 of the attendant PC 6, and thus repeated description thereof will be omitted.

In each item of the status display portion 626, a sorting icon 6261 displayed with an upward arrow and a downward arrow is displayed. When the sorting icon 6261 of any first item is operated, a status of a customer is sorted using the first item as a key. For example, in a state illustrated in FIG. 17, when the sorting icon 6261 of the item of the excursion time is operated, each piece of data is sorted in an ascending order of the excursion time. That is, the data in the lowest row in which the excursion time is the smallest is located at the top. Similarly, the data in all the rows are sorted. In this state, when the sorting icons 6261 of the items of the excursion times are operated again, the data is sorted in a descending order of excursion times in this time.

The same applies even when the sorting icons 6261 of the other items are operated. When numerical values of items serving as keys at the time of ascending or descending sorting, numerical values of the items located further left are preferentially sorted. For example, when the excursion times are sorted in an ascending order, the excursion times are the same in the row of the third stage (a row in which the cash register No is 403) and the row of the fourth stage (a row in which the cash register No is 404) in the example of FIG. 17, but the row of the third stage in which a value of the terminal code which is an item located leftmost is small is located above. In a default display form of the status display portion 626, an item of the status is set so that data of "shopping" is above.

In the status display portion 626, a highlight icon 6262 is displayed in the item of the status. The highlight icon 6262 is an icon indicating that the transaction information includes a highlight commodity. An attendant can recognize that it is necessary to perform careful attendant checking on a transaction of data in which the highlight icon 6262 is displayed.

Here, a status entry such as "shopping" is displayed and also functions as an operator (button) by which an item selection operation can be received. When any status entry is selected from the status display portion 626, the transaction detail screen related to the terminal code of the selected item is displayed. That is, the status entry displayed in the status display portion 626 indicates a status of a customer and functions as an example of an operator (button or the like) to be selected for displaying the transaction detail screen related to the corresponding terminal code. An operation of selecting a status entry can be utilized, for example, when transaction details of a portable terminal 4 is being confirmed. Hereinafter, a status entry displayed in the status display portion 626 is also called a "status operator".

On the transaction list screen, the transaction detail screen related to the transaction code included in the checkout barcode can be displayed by reading the checkout barcode, and a message 627 for guiding the display of the transaction detail screen is displayed above the status display portion 626.

In this way, on the transaction list screen, it is possible to give an instruction to display the transaction detail screen by any of three operation methods: (1) direct input of the terminal code via the terminal code input field 622, (2) selection of the status operator, and (3) reading of a checkout barcode.

Referring back to FIG. 15, an overview of the operation of the transaction management system 1 will be described.

When the customer ends the commodity registration of a purchase commodity and operates the payment icon on the transaction information display screen, a checkout instruction is input to the portable terminal 4 (ACT 18). The portable terminal 4 transmits the checkout instruction to the server apparatus 2 (ACT 19).

The server apparatus 2 updates the transaction information based on the received checkout instruction and calculates a transaction amount (ACT 20). Specifically, the server apparatus 2 registers a checkout instruction time corresponding to the transaction code included in the checkout instruction in the transaction information management table 215. The server apparatus 2 calculates the transaction amount based on commodity information corresponding to the transaction code. The server apparatus 2 transmits the calculated transaction amount and the attendant checking screen display instruction to the portable terminal 4 (ACT 21).

The portable terminal 4 generates a checkout barcode indicating the transaction code (ACT 22). The portable terminal 4 checks a mode of the movable self-register system 3 with reference to the mode information unit 414 (ACT 23) and displays the attendant checking screen when the mode is the front checking mode (ACT 24). When the mode of the movable self-register system 3 is the normal mode, the portable terminal 4 displays a checkout screen to be described below.

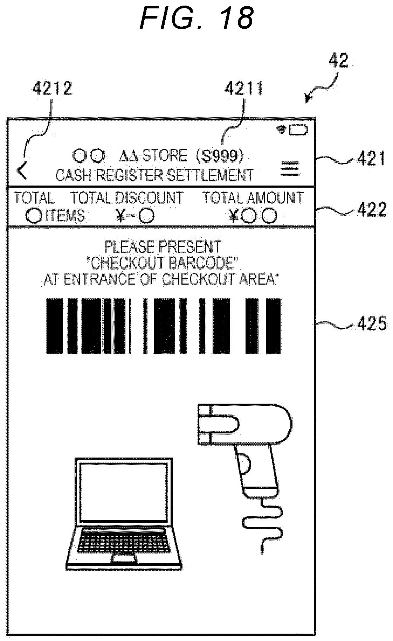

Here, the attendant checking screen will be described. FIG. 18 is a diagram illustrating an example of an attendant checking screen displayed by the portable terminal 4. In the display unit 42 of the portable terminal 4, the header portion 421, the sum information portion 422, and a checkout barcode portion 425 are displayed on the attendant checking screen.

In the header portion 421, a company name "OO", a store name "ΔΔ Store", text "cash register settlement" indicating that the customer inputs a checkout instruction, and the like are displayed. In the header portion 421, the terminal code portion 4211 is formed. In the terminal code portion 4211, a terminal code is displayed. In the header portion 421, a return button 4212 is displayed. The return button 4212 for returning to a previous screen. For example, when the return button 4212 is operated on the attendant checking screen, the portable terminal 4 returns to the transaction information display screen (see FIG. 16).

In the sum information portion 422, a total number of registered commodities and a total amount (amount due) are displayed. When a commodity for which a price is to be discounted is registered in the transaction, a total amount of a price discount amount is displayed in the sum information portion 422.

In the checkout barcode portion 425, a checkout barcode indicating the transaction code is displayed. In the checkout barcode portion 425, a guidance message for a customer, for example, a message "Please present "checkout barcode" at entrance of checkout area" is displayed. Further, in the checkout barcode portion 425, an illustration for suggesting an image of reading of the checkout barcode with the scanner unit 64 of the attendant PC 6 is displayed. The customer viewing the attendant checking screen can recognize the need to move to a place where the attendant PC 6 is disposed and present the checkout barcode.

Referring back to FIG. 15, the overview of the operation of the transaction management system 1 will be described.

When the attendant scans the checkout barcode of the attendant checking screen presented by the customer with the scanner unit 64, the checkout barcode is input to the attendant PC 6 (ACT 25). The attendant PC 6 reads the transaction code from the checkout barcode and transmits a transaction information request including the transaction code to the server apparatus 2 (ACT 26).

The server apparatus 2 extracts the transaction information corresponding to the transaction code included in the transaction information request from the transaction information management table 215 (ACT 27). The server apparatus 2 transmits the extracted transaction information to the attendant PC 6 (ACT 28).

When the transaction information request including the terminal code is received from the attendant PC 6, the server apparatus 2 extracts the transaction information corresponding to the terminal code included in the transaction information request from the transaction information management table 215 in ACT 27.

The attendant PC 6 switches the display from the transaction list screen and displays the transaction detail screen (ACT 29).

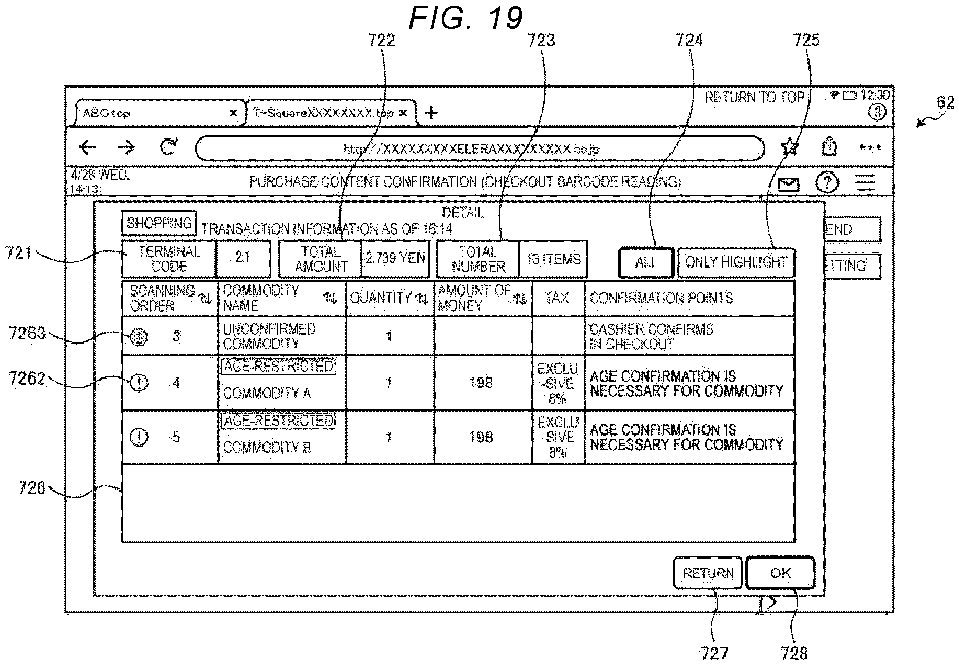

Here, the transaction detail screen will be described. FIG. 19 is a diagram illustrating an example of a transaction detail screen displayed by the attendant PC 6. The display unit 62 of the attendant PC 6 displays a terminal code display portion 721, a total amount display portion 722, a total number display portion 723, a display switching button 724, a display target display portion 725, a commodity detail portion 726, a return button 727, and an OK button 728 on the transaction detail screen.

In the terminal code display portion 721, a terminal code corresponding to a target transaction that is a display target on the transaction detail screen is displayed. In the total amount display portion 722, a transaction amount of the target transaction is displayed. In the total number display portion 723, the number of commodities purchased in the target transaction is displayed.

The display switching button 724 is for switching the display target displayed in the commodity detail portion 726. The display switching button 724 switches the display target displayed in the commodity detail portion 726 between all the commodities in the transaction or only certain highlight commodities. In the example of FIG. 19, only the highlight commodities are being displayed in the commodity detail portion 726. Therefore, the display switching button 724 is in a state in which text of "All" is displayed. When the display switching button 724 is operated in this state, all the commodities that in the transaction are then displayed in the commodity detail portion 726.

When an attendant is required to check that the registered (listed) commodities match all the commodities in a shopping cart, the commodity detail portion 726 displays all the commodities registered in the transaction. When an attendant checks is required to check only certain item types (the highlight commodities) from among all the registered commodities, only these highlight commodities are displayed in the commodity detail portion 725.

In the display target display portion 725, the display targets displayed in the commodity detail portion 726 are displayed. In the example of FIG. 19, only the highlight commodities are displayed in the commodity detail portion 726. Therefore, "Only highlight" is displayed in the display target display portion 725.

In the commodity detail portion 726, commodity details are displayed. Specifically, in the commodity detail portion 726, entries for scanning order, commodity name, quantity, amount of money due, tax due, and relevant confirmation points (attendant check notes, comments, or the like) are displayed in association for each commodity. The scanning order entry indicates a scanned order value indicating at which point in the transaction the commodity was registered. The commodity name indicates a name of a commodity. The quantity indicates the number of registered commodities of the same type (quantity). The amount of money due indicates the amount of money (the price) due for the registered commodities, specifically, this amount is the value obtained by multiplying unit prices by the quantity. The tax indicates a type of tax to be applied. The confirmation points indicate a display comment preset for the commodity (see the highlight information management table 214).

In the commodity detail portion 726, a sorting icon 7261 is displayed for the columns of the scanning order, the quantity, and the amount of money. A function of the sorting icon 7261 is similar to the sorting icon 6261 on the transaction list screen of FIG. 17.

In the commodity detail portion 726, a highlight icon 7262 or an importance icon 7263 is displayed in the item of the scanning order. The highlight icon 7262 is an icon indicating a highlight commodity. The importance icon 7263 is an icon indicating a commodity with high importance in the attendant checking. The highlight icon 7262 and the importance icon 7263 have the same shape and are displayed with different colors.

The return button 727 for returning to the transaction list screen. The OK button 728 is for inputting information indicating that the attendant checking is completed. When the OK button 728 is operated, the attendant PC 6 transmits the checking information to the server apparatus 2.

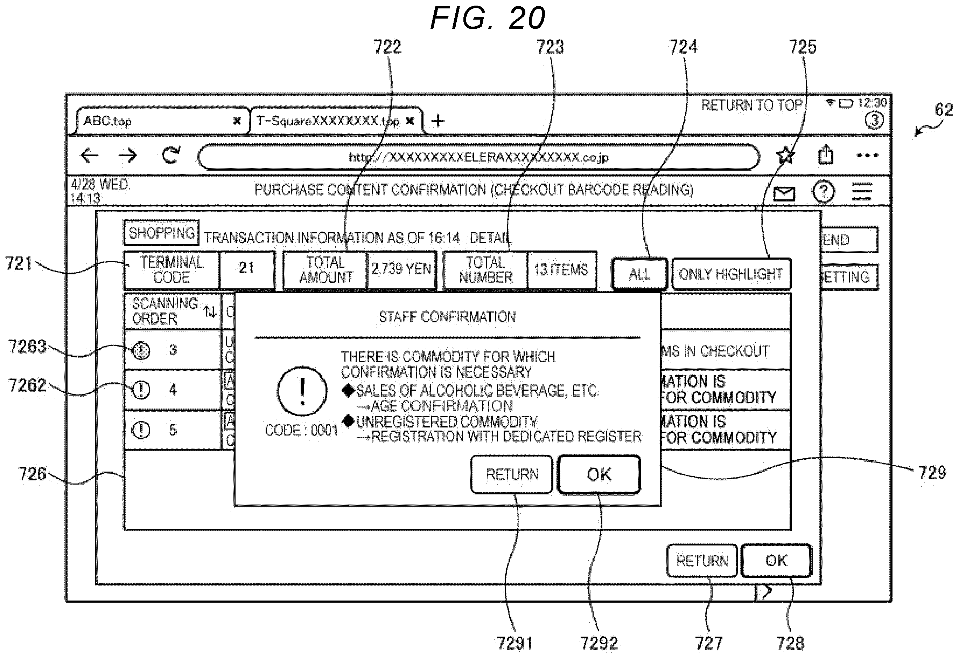

FIG. 20 is a diagram illustrating an example of a guidance screen displayed by the attendant PC 6. The guidance screen is a screen displayed at a front stage at which the transaction detail screen is displayed. The store can freely and selectively set whether to display the guidance screen. The guidance screen has a form in which a guidance display portion 729 is popped up on the transaction detail screen.

The guidance display portion 729 is displayed only when a highlight commodity is included in the transaction. In the guidance display portion 729, a guidance with content to be performed by the attendant in the attendant checking is displayed. For example, in the guidance display portion 729, a message indicating that a commodity for which confirmation by the attendant is necessary is included in transaction target commodities. In the guidance display portion 729, a message indicating necessity of age confirmation for alcohol or the like, necessity for registration of an unregistered commodity in a dedicated register, or the like is displayed.

In the guidance display portion 729, a return button 7291 and an OK button 7292 are displayed. The return button 7291 is for returning to the transaction list screen. The OK button 7292 is for inputting information indicating that the attendant has confirmed content displayed in the guidance display portion 729. When the OK button 7292 is pressed, the guidance display portion 729 is erased and the transaction detail screen is displayed.

Referring back to FIG. 15, the overview of the operation of the transaction management system 1 will be described.

When the OK button 728 is operated on the transaction detail screen, a checking completion input is performed in the attendant PC 6 (ACT 30). The attendant PC 6 transmits the checking information to the server apparatus 2 (ACT 31).

The server apparatus 2 updates the attendant checking flag (ACT 32). Specifically, the server apparatus 2 rewrites the attendant checking flag corresponding to the transaction code included in the checking information in the transaction information management table 215 to "1". The server apparatus 2 transmits the checkout screen display instruction to the portable terminal 4 (ACT 33).

When the portable terminal 4 receives the checkout screen display instruction, the portable terminal 4 invalidates the above-described return button 4212 (ACT 34). Then, the portable terminal 4 displays the checkout screen switched from the attendant checking screen to the display unit 42 (ACT 35).

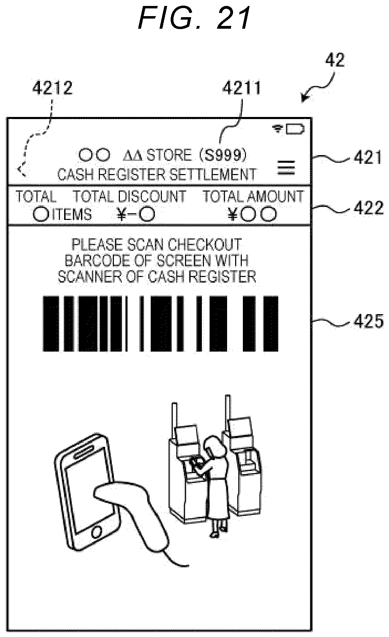

Here, the checkout screen will be described. FIG. 21 is a diagram illustrating an example of a checkout screen displayed by the portable terminal 4. The display unit 42 of the portable terminal 4 displays the header portion 421, the sum information portion 422, and the checkout barcode portion 425 on the checkout screen. The checkout screen is a screen similar to the attendant checking screen. Therefore, here, differences from the attendant checking screen will be described and repeated description thereof will be omitted.

In the header portion 421, as in the attendant checking screen, a company name "OO", a store name "ΔΔ Store", text "cash register settlement" indicating that the customer inputs a checkout instruction, and a terminal code are displayed. In the header portion 421 of the checkout screen, the return button 4212 displayed on the attendant checking screen enters an invalidation state through the process of ACT 34. In this context, invalidation means an operation-disabled state. When the return button 4212 is invalidated, the return button 4212 may be displayed in a gray-out state or not displayed at all, for example.

On the checkout screen of FIG. 21, the return button 4212 is in the gray-out state, and thus its operation is disabled. Accordingly, return to the previous screen (the attendant checking screen) from the checkout screen is disabled.

Here, the reason for invalidation of the return button 4212 on the checkout screen is based on the following circumstance. In the case of setting of the front checking mode, the registered commodities are in the confirmation state after the attendant checking is completed. Therefore, additional registration or cancellation of commodities cannot be performed by the customer herself or himself and now only payment can be performed with the cash register 5. When a return to the attendant checking screen or the previous transaction information display screen is allowed after the completion of the attendant checking, the registration content of the commodities may be edited carelessly by the customer after the attendant checking has been nominally already been completed. In this case, an age-restricted commodity or the like may be purchased without performing of an age confirmation on the customer.

Accordingly, in the portable terminal 4 according to an embodiment, in order to prevent the return to the previous screen on the checkout screen displayed in the completion of the attendant checking, the checkout screen is displayed with the return button 4212 invalidated (e.g., non-selectable). Accordingly, in the portable terminal 4, the return to the attendant checking screen or the previous screen on which the commodity registration can be performed can be prevented, and thus the registration state of the commodities after an attendant checking has already been completed can be maintained.

When the normal mode is selected for the movable self-register system 3, a checkout screen on which the return button 4212 is selectable may be displayed as in the attendant checking screen without being limited to this form.

In the checkout barcode portion 425, a guidance message for the customer, for example, a message such as "Please scan checkout barcode of screen with scanner of cash register." is displayed. In the checkout barcode portion 425, an illustration for suggesting an image of reading of the checkout barcode with the scanner unit of the cash register 5 is displayed. The customer viewing the checkout screen can recognize the need to move to the cash register 5 and scan the checkout barcode.

Referring back to FIG. 15, the overview of the operation of the transaction management system 1 will be described.

When the customer scans the checkout barcode with the scanner unit of the cash register 5, the checkout barcode is input to the cash register 5 (ACT 36). The cash register 5 requests the transaction information of the transaction code read from the checkout barcode from the server apparatus 2 (ACT 37).

The server apparatus 2 performs the attendant checking determination process (ACT 38). The attendant checking determination process is a process of determining whether the attendant checking on a transaction on which the transaction information request is made is completed. Details of the attendant checking determination process will be described below.

When the attendant checking ends, the server apparatus 2 transmits the transaction information corresponding to the transaction code included in the transaction information request to the cash register 5 (ACT 39). At this time, the server apparatus 2 stores the cash register No in association with the transaction code included in the transaction information request in the transaction information management table 215.

When the attendant checking does not end, the server apparatus 2 transmits error information to the cash register 5. The cash register 5 receiving the error information displays, for example, a message for urging reception of the attendant checking for the customer.

The cash register 5 receiving the transaction information performs the checkout process (ACT 40). The cash register 5 performs a checkout process related to cash settlement or a checkout process by cashless settlement according to a selection of the customer. When an attendant operation is necessary, for example, when an unregistered commodity is still included in the purchase commodities of the customer, the cash register 5 can also be operated by the attendant. When the checkout process is completed, the cash register 5 transmits a checkout completion notification to the server apparatus 2 (ACT 41).

The server apparatus 2 updates the transaction information based on the received checkout completion notification (ACT 42). Specifically, the server apparatus 2 rewrites a checkout completion flag corresponding to the transaction code included in the checkout completion notification to "1" in the transaction information management table 215.

The server apparatus 2 transmits the checkout completion notification to the portable terminal 4 (ACT 43). The server apparatus 2 transmits the checkout completion notification to the portable terminal 4 specified with the terminal code corresponding to the transaction code included in the checkout completion notification received from the cash register 5.

The portable terminal 4 displays information indicating the completion of the checkout on the display unit 42 (ACT 44).

Through the foregoing operations, the customer can perform payment with the cash register 5 after the attendant checking by the attendant near an entrance of the checkout area is received. Therefore, the attendant does not need to move to the cash register 5 whenever checking is necessary, and thus work efficiency of the attendant in the checking is improved.

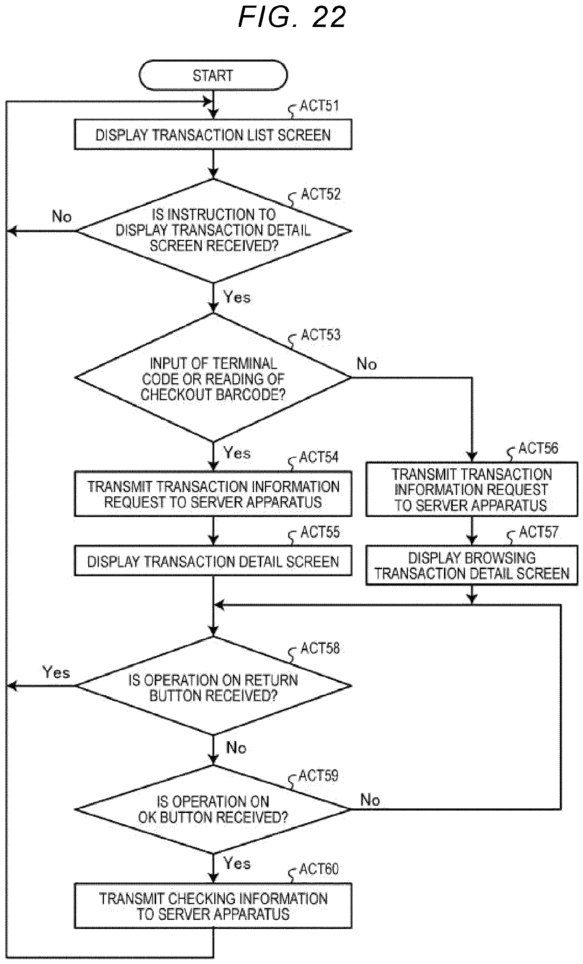

Next, a process related to display of the transaction detail screen on the above-described transaction list screen will be described. FIG. 22 is a flowchart illustrating a transaction detail screen displaying process by the control unit 60 of the attendant PC 6. The present process is a process indicating an example of a process performed by the attendant PC 6 in ACTs 25 to 31 described in FIG. 15.

With the transaction list screen displayed (ACT 51), the control unit 60 waits until giving of an instruction to display the transaction detail screen is received (No in ACT 52).

When an instruction to display the transaction detail screen is received (Yes in ACT 52), the control unit 60 determines whether there has also been an input of the terminal code via the terminal code input field 622 or reading of the checkout barcode (that is, the transaction code) by the scanner unit 64 (ACT 53).

Here, when the terminal code is input either via the terminal code input field 622 or the reading of the checkout barcode through the scanner unit 64 (Yes in ACT 53), the control unit 60 transmits a transaction information request (including the terminal code or the transaction code) to the server apparatus 2 (ACT 54). Then, based on transaction information replied from the server apparatus 2, the control unit 60 displays the transaction detail screen as depicted in FIG. 19 on the display unit 62 (ACT 55).

Conversely, when the request is not related to the scanning or input of a terminal code or checkout barcode but rather a selection operation on a status operator displayed in the commodity detail portion 726 (No in ACT 53), the control unit 60 transmits a transaction information request including a transaction code related to the selected status operator to the server apparatus 2 (ACT 56). In this case, based on transaction information replied from the server apparatus 2, the control unit 60 displays a transaction detail screen on which the attendant checking operator is non-selectable (hereinafter referred to as a browsing transaction detail screen) on the display unit 62 (ACT 57).

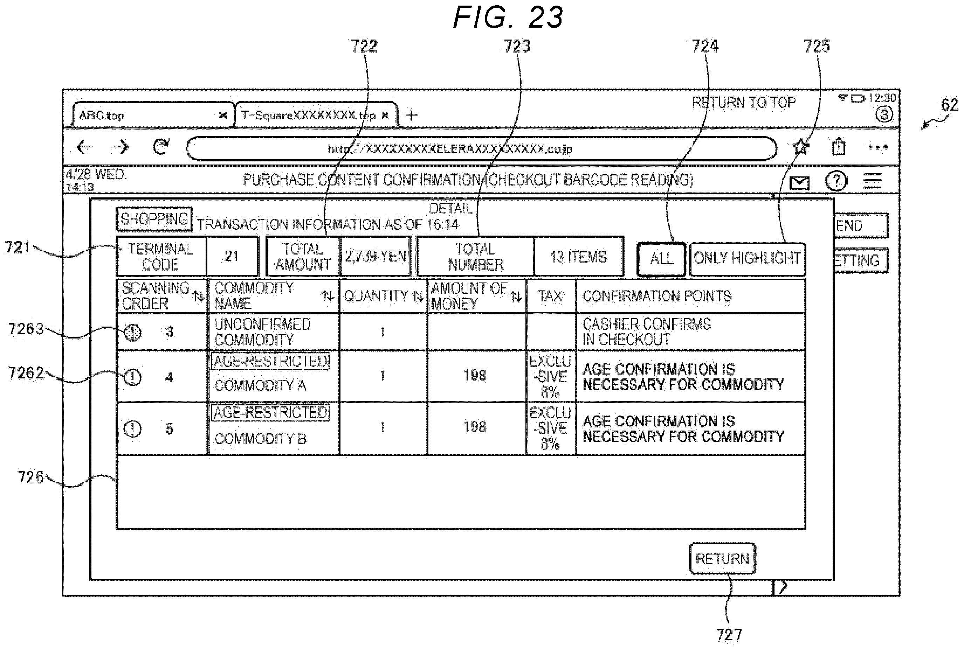

Here, the browsing transaction detail screen will be described. FIG. 23 is a diagram illustrating an example of a browsing transaction detail screen displayed by the attendant PC 6. Since the browsing transaction detail screen is a screen similar to the transaction detail screen, differences from the transaction detail screen will be described here and description of aspects common to both will be omitted.

As illustrated in FIG. 23, the OK button 728 displayed on the transaction detail screen and set for inputting information indicating completion of the attendant checking is not displayed on the browsing transaction detail screen. That is, on the browsing transaction detail screen, a commodity detail of the registered commodities can be confirmed and the operation of completing the attendant checking is invalidated (disabled).

The reason that the browsing transaction detail screen displayed through the operation of selecting the status operator has specification different from the transaction detail screen displayed through another operation method is based on the following circumstance.

First, the input of the terminal code via the terminal code input field 622 or the reading of the checkout barcode through the scanner unit 64 can be performed by the attendant facing the customer, and thus the terminal code or the checkout barcode of a corresponding customer will generally be accurately input (or read). On the other hand, when selections are made by status operator, a status entry of the customer may be selected from among a plurality of status entries (status operators) of different customers displayed in the status display portion 626. Therefore, an erroneous operation occurs may more easily occur as compared with other selection methods for completing the attendant checking and the selection may be more likely to be performed erroneously from the displayed transaction detail screen.

In the attendant PC 6 according to an embodiment, a transaction detail screen on which the operator for completing the attendant checking is validated and a transaction detail screen on which the operator for completing the attendant checking is invalidated can be switched and displayed. Accordingly, in the attendant PC 6, it is possible to avoid a situation in which the operation for completing the attendant checking is performed from an erroneously displayed transaction detail screen.

On the browsing transaction detail screen of FIG. 23, the OK button 728 is simply not displayed, but the invalidation method is not limited thereto. For example, the OK button 728 may be displayed in a gray-out state in which operation (selection) is disabled.

Referring back to FIG. 22, after the transaction detail screen is displayed in ACT 55 or 57, the control unit 60 determines whether the return button 727 is selected (ACT 58). When the return button 727 is selected (Yes in ACT 58), the control unit 60 erases the transaction detail screen and returns the process to ACT 51, and thus displays the transaction list screen on the display unit 62.

When the return button 727 has not been selected (No in ACT 58), the control unit 60 determines whether the OK button 728 has been selected(ACT 59). Here, when the operation on the OK button 728 has not been selected, the control unit 60 returns the process to ACT 58. When the browsing transaction detail screen is displayed in ACT 57, the OK button 728 is invalidated. Therefore, the control unit 60 waits for the return button 727 to be selected in ACT 58 without performing the determination process of ACT 59 (No in ACT 58).

When the OK button 728 has been selected in ACT 59 (Yes in ACT 59), the control unit 60 transmits the checking information including transaction-specific information (a transaction code or a terminal code) to the server apparatus 2 (ACT 60). The control unit 60 erases the transaction detail screen and returns the process to ACT 51 to display the transaction list screen on the display unit 62.

On the transaction detail screen, an operation of editing the registered commodities can also be performed in addition to the confirming of the details of the registered commodities or indicating the completing of the attendant checking. For example, when registration of a commodity has been omitted or a commodity (alcohol, cigarette, or the like) that is not allowed to be purchased by a customer due to age or the like is found in the checking by the attendant, the additional registration of the omitted commodity or an operation of cancelling the registration of the restricted commodity can be performed on the transaction detail screen.

Specifically, when a target commodity for additional registration is designated on the transaction detail screen, the control unit 60 transmits a registration request (including a transaction code or a terminal code) or a commodity code of the target commodity for the additional registration to the server apparatus 2. In this case, the control unit 20 of the server apparatus 2 performs the commodity registration based on the registration request as for the registration request transmitted from a portable terminal 4. Specifically, the control unit 20 of the server apparatus 2 reads commodity information corresponding to the commodity code included in the registration request from the commodity master 212 and registers the commodity information in the transaction information management table 215.

A method of designating the target commodity for the additional registration is not limited. For example, the target commodity for the additional registration may be designated by reading a commodity barcode. For example, the target commodity for the additional registration may also be designated by performing an operation of increasing the quantity displayed in the commodity detail portion 726. In this case, the control unit 60 may transmit a registration request corresponding to an added quantity or may transmit a registration request including the added quantity.

When a commodity for the cancellation target is designated on the transaction detail screen, the control unit 60 transmits a registration cancellation request including a transaction code or a terminal code related to a transaction displayed on the transaction detail screen or a commodity code of the commodity of the cancellation target to the server apparatus 2. In this case, the control unit 20 of the server apparatus 2 performs a process of cancelling the commodity registration based on a registration cancellation request. Specifically, the control unit 20 of the server apparatus 2 deletes transaction information corresponding to a condition of the transaction code or the terminal code included in the registration cancellation request and the commodity code from the transaction information management table 215.

The method of designating a commodity as the cancellation target is not specified in particular. For example, the cancellation target may be designated via the commodity detail portion 726 or by reading of a commodity barcode. For example, the cancellation target may also be designated by performing an operation for decreasing the registered quantity value displayed in the commodity detail portion 726. In this case, the control unit 60 may transmit a registration cancellation request corresponding to a subtracted quantity or a registration cancellation request including the cancelled quantity value.

The control unit 60 of the attendant PC 6 updates the transaction detail screen displayed on the display unit 62 by transmitting the registration request or the registration cancellation request and then acquiring edited transaction information (store transaction information) from the server apparatus 2.

In order to prevent the editing operation from being performed on an erroneously displayed transaction detail screen, it may be desirable to display the browsing transaction detail screen with the editing operation being invalidated (non-permitted) for operation via the transaction detail screen.

Specifically, when an instruction to display the transaction detail screen is given by either an input of the terminal code via the terminal code input field 622 or reading of the checkout barcode through the scanner unit 64, the control unit 60 displays the transaction detail screen with the editing operation being validated (permitted). When an instruction to display the transaction detail screen is given via the status operator displayed in the commodity detail portion 726, the control unit 60 displays the browsing transaction detail screen with the editing operation being invalidated. Accordingly, in the attendant PC 6, it is possible to inhibit a situation in which the editing operation of editing transaction content is performed from the erroneously displayed transaction detail screen.

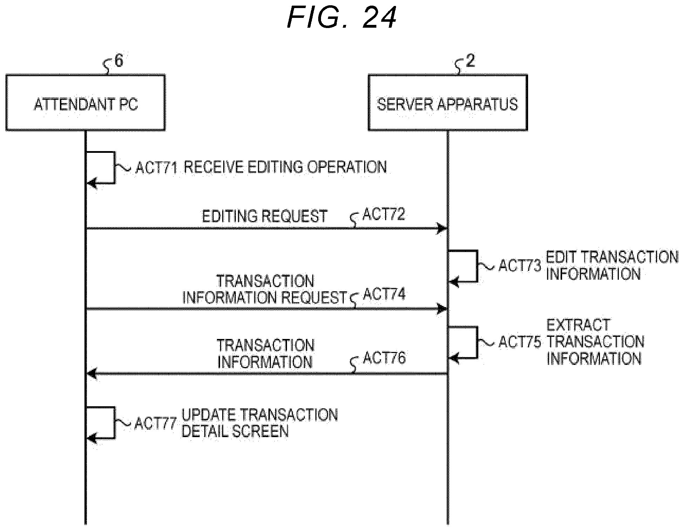

FIG. 24 is a sequence chart illustrating an example of a transaction editing process performed between the attendant PC 6 and the server apparatus 2. The sequence chart illustrates an operation of editing transaction content performed with the transaction detail screen displayed at the attendant PC 6. The transaction detail screen can be displayed by the operation method for either the input of the terminal code via the terminal code input field 622 or the reading of the checkout barcode through the scanner unit 64.

When an operation of editing a commodity is received based on the transaction detail screen (ACT 71), the control unit 60 of the attendant PC 6 transmits an editing request including a transaction code or a terminal code and a commodity code of a commodity that is to be edited (an editing target) to the server apparatus 2 (ACT 72). For example, when the editing operation is an additional registration of a commodity, the control unit 60 transmits a registration request (as an editing request) including a transaction code and a commodity code of a commodity that is an additional registration target to the server apparatus 2. For example, when the editing operation is a registration cancellation of a previously registered commodity, the control unit 60 transmits a registration cancellation request (as an editing request) including a transaction code and a commodity code of the commodity that is to be cancelled (a cancellation target) to the server apparatus 2.

Based on the received editing request, the control unit 20 of the server apparatus 2 edits the transaction information according to the editing request (ACT 73). For example, when a registration request is received as an editing request, the control unit 20 reads the commodity information corresponding to the commodity code included in the registration request from the commodity master 212 and registers the commodity information in the transaction information management table 215. For example, when the registration cancellation request is received as an editing request, the control unit 20 deletes the entry in the transaction information corresponding to the commodity code included in the registration cancellation request from the transaction information management table 215.

Subsequently, the control unit 60 of the attendant PC 6 transmits a transaction information request to the server apparatus 2 designating the transaction code or the terminal code of the transaction that is an editing target (ACT 74).

The control unit 20 of the server apparatus 2 extracts the transaction information corresponding to the transaction code (or the terminal code) included in the transaction information request, that is, the transaction information to be edited, from the transaction information management table 215 (ACT 75). The server apparatus 2 transmits the extracted transaction information to the attendant PC 6 (ACT 76).

The control unit 60 of the attendant PC 6 updates and displays the transaction detail screen based on the transaction information transmitted from the server apparatus 2 (ACT 77).

In an embodiment, the edited transaction information is acquired from the server apparatus 2 by transmitting the transaction information request from the attendant PC 6 after the editing of the transaction content has occurred, but the disclosure is not limited thereto. The control unit 20 of the server apparatus 2 may transmit the transaction information to the attendant PC 6 after the editing of the transaction information according to an editing request, and thus the attendant PC 6 may acquire the already edited transaction information.

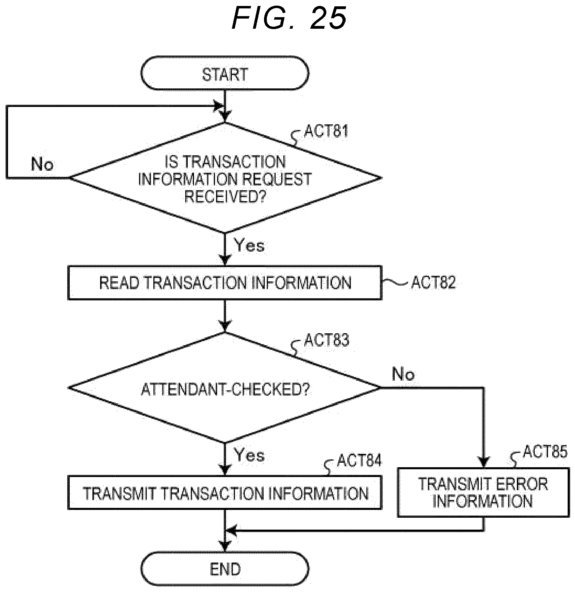

Next, an attendant checking determination process performed by the server apparatus 2 will be described. FIG. 25 is a flowchart illustrating an example of an attendant checking determination process by the control unit 20 of the server apparatus 2.

The control unit 20 determines whether the transceiver unit 2001 receives the transaction information request from the cash register 5 (ACT 81). When the transceiver unit 2001 does not receive the transaction information request (No in ACT 81), the process returns to ACT 81 and waiting is performed.

When the transceiver unit 2001 receives the transaction information request (Yes in ACT 81), the information management unit 2002 reads the transaction information corresponding to the transaction code included in the transaction information request from the transaction information management table 215 (ACT 82).

Subsequently, the information processing unit 2003 determines whether the read transaction information is attendant-checking completion information (ACT 83). Specifically, the information processing unit 2003 determines whether "1" is registered in the attendant checking flag of the read transaction information.

When the read transaction information is the attendant-checking completion information (Yes in ACT 83), the transceiver unit 2001 transmits the transaction information to the cash register 5 (ACT 84). Then, the control unit 20 ends the attendant checking determination process.

When the read transaction information is not the attendant-checking completion information (No in ACT 83), the transceiver unit 2001 transmits error information to the cash register 5 (ACT 85). The error information is information indicating that the transaction information is not transmitted since the attendant checking is not completed. Then, the control unit 20 ends the attendant checking determination process.

Through the attendant checking determination process, the server apparatus 2 transmits the transaction information regarding only the transaction for which the attendant checking is completed to the cash register 5.

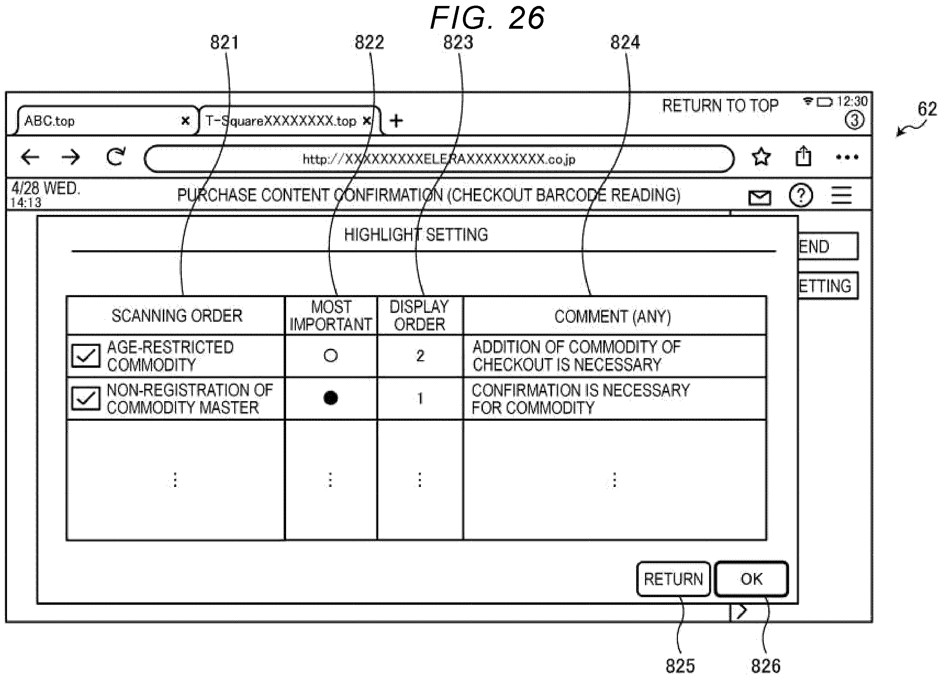

Next, a highlight commodity setting method will be described. FIG. 26 is a diagram illustrating an example of a highlight setting screen displayed by the attendant PC 6. The highlight setting screen is displayed, for example, by operating the highlight setting button 625 on the transaction list screen illustrated in FIG. 17. The display unit 62 of the attendant PC 6 displays an item selection field 821, an importance selection field 822, a display order setting field 823, a display comment setting filed 824, a return button 825, and a save button 826 on the highlight setting screen.

In the item selection field 821, a plurality of items are displayed and a check box is displayed to correspond to each item. For example, as the times, an age-restricted commodity, a commodity master unregistered-commodity, a set sales commodity, an automatic discount commodity, a high-price commodity, and other many items are prepared. The user operating the attendant PC 6 checks the check box of an item specifically set as a highlight item by its store or the like.

The commodity corresponding to the highlight item is a highlight commodity and a highlight icon 7262 can be displayed on the transaction detail screen (see FIG. 19). A highlight commodity can be a commodity such as alcohol or cigarettes, which is an age-restricted commodity.

In the importance selection field 822, a radio button corresponding to each item is displayed. The user operating the attendant PC 6 manipulates the radio button corresponding to an important item during the attendant checking. The importance icon 7263 is displayed on the transaction detail screen (see FIG. 19). The importance may be able to be selected only for a highlight item for which the check box of the item selection field 821 is checked or for any item for which the check box of the item selection field 821 is not checked.

In the display order setting field 823, an input field corresponding to each item is displayed. The user operating the attendant PC 6 inputs a display order in the input field. The input display order corresponds to the display order of items on the transaction detail screen. In the example illustrated in FIG. 23, the display order value of the commodity master unregistered-commodity is set to "1". Therefore, when the commodity master unregistered-commodity is included in a transaction, the commodity master unregistered-commodity will be displayed on the top portion of the transaction detail screen.

In the display comment setting filed 824, a comment input field corresponding to each item is displayed. The user operating the attendant PC 6 inputs a comment in the comment input field as necessary. In the display comment setting filed 824, a comment can be input only for a highlight item of a corresponding item or an item for which importance is selected. The input comment is displayed as a confirmation point or detail on the transaction detail screen.

The return button 825 is for returning to the transaction list screen. The save button 826 is for saving setting information that has been input on the highlight setting screen. When the save button 826 is pressed, setting information and store information (e.g., a company code and a store code) for the store in which the attendant PC 6 is installed are transmitted to the server apparatus 2.

The server apparatus 2 updates the highlight information management table 214 based on the received store information and setting information. Accordingly, the server apparatus 2 can manage a highlight commodity set at each store.

Next, a modification of the attendant checking determination process will be described. In the above-described example, the server apparatus 2 performs the attendant checking determination process. In the modification, the cash register 5 performs the attendant checking determination process.

In an example, it is assumed a check code indicating whether the attendant checking is completed is also encoded in addition to the transaction code in a checkout barcode to be read by the scanner unit of the cash register 5. For example, in the sequence chart illustrated in FIG. 15, when the checkout screen display instruction is received in ACT 33, the portable terminal 4 generates a checkout barcode to be displayed on the checkout screen. In the checkout barcode displayed on the checkout screen, a check code indicating whether the attendant checking is completed can also be encoded in addition to the transaction code. The customer causes the checkout barcode to be read by the scanner unit of the cash register 5.

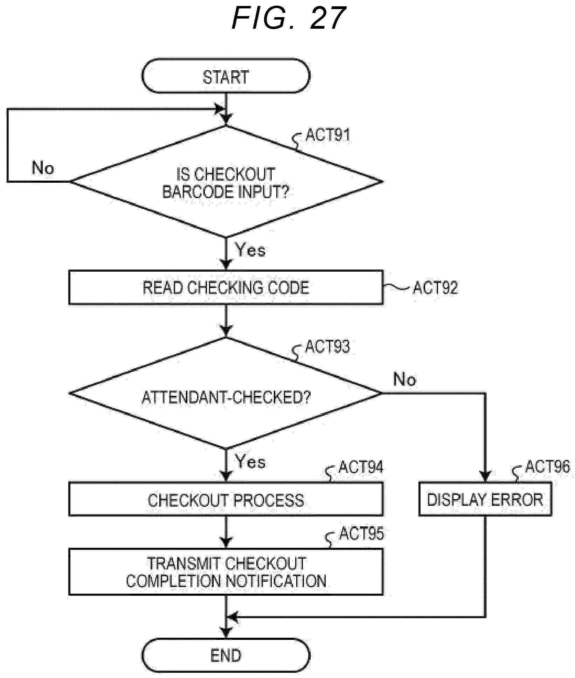

FIG. 27 is a flowchart illustrating an example of an attendant checking determination process performed by the control unit of the cash register 5.

The control unit determines whether the checkout barcode has been input (ACT 91). When the checkout barcode is not input (No in ACT 91), the process returns to ACT 91 and waiting is performed. When the checkout barcode is input, the control unit reads the check code encoded in the checkout barcode (ACT 92).

The control unit determines whether the read check code indicates that the attendant checking is completed (ACT 93). When the check code indicates that the attendant checking is completed (Yes in ACT 93), the control unit performs a checkout process (ACT 94). The checkout process is similar to the described checkout process. Subsequently, the control unit transmits a checkout completion notification to the server apparatus 2 (ACT 95). Then, the control unit ends the attendant checking determination process.

When the check code indicates that the attendant checking is not completed in the process of ACT 63 (No in ACT 93), the control unit causes the display unit of the cash register 5 to display error information (ACT 96). The displayed error information is, for example, information indicating a situation in which payment cannot be performed since the attendant checking is not completed. Then, the control unit ends the attendant checking determination process.

As described above, the attendant PC 6 according to an embodiment is capable of communicating with the server apparatus 2 that manages transaction-specific information (a transaction code or a terminal code) for a transaction, transaction information indicating a breakdown (list) of commodities registered in the transaction, state information (status) indicating a state of a customer performing registration, and checking completion information (attendant checking flag) registered after a staff member completes checking of the items registered by the customer. The transaction list screen on which the state information of customers related to each transaction managed by the server apparatus 2 is displayed. When an operation of designating a specific transaction is received, the transaction detail screen representing transaction information of the designated transaction and including the OK button 728 for receiving an attendant checking operation is displayed. The attendant PC 6 displays the transaction detail screen for validating or invalidating the OK button 728 in accordance with an operation method of receiving the designation of the transaction.

Accordingly, in the attendant PC 6 performing the attendant checking, it is possible to display the transaction detail screen on which the OK button 728 is set to be validated or invalidated in accordance with the operation method when the transaction is designated. Therefore, it is possible to reduce a situation in which the attendant checking is performed on an erroneously selected (designated) transaction. Accordingly, checking work by the attendant becomes easy.

The server apparatus 2 includes: a transaction management unit (the information management unit 2002) that manages transaction-specific information (a transaction code or a terminal code) for specifying one transaction, transaction information necessary for a checkout process for payment by a customer, and checking completion information (an attendant checking flag) registered when a staff member completes checking of the commodity registered through an operation of the customer in association; a reception unit (the transceiver unit 2001) that receives a transaction information request including the transaction-specific information; and an output unit (the transceiver unit 2001) that outputs transaction information corresponding to the transaction-specific information under a condition that the transaction-specific information included in the transaction information request received by the reception unit is registered in association with the checking completion information.

Accordingly, the server apparatus 2 can guide a customer to receive the attendant checking before the customer performs payment with the cash register 5. Therefore, checking work by the attendant becomes easy.

The server apparatus 2 according to the embodiment further includes the mode setting unit 2004 that can set a front checking mode in which the output unit outputs the transaction information when transaction-specific information is registered in association with the checking completion information after the reception unit receives the transaction information request and a normal mode in which the output unit outputs transaction information without concern for transaction-specific information being registered in association with the checking completion information after the reception unit receives the transaction information request.

Accordingly, the server apparatus 2 can select a mode for the movable self-register system 3 and switch between the front checking mode and the normal mode. Therefore, a store can set the mode of the movable self-register system 3 to whatever is deemed appropriate according to the preferences for the store's own administration.

As described above, the transaction management system 1 according to the embodiment includes the server apparatus 2, the attendant PC 6, and the cash register 5. The server apparatus 2 manages the transaction-specific information (a transaction code or a terminal code) for specifying one transaction, transaction information indicating a breakdown of a commodity registered in the one transaction, state information (status) indicating a state of a customer performing registration of the commodity, and checking completion information (attendant checking flag) registered when a staff member completes checking of the commodity registered through an operation of the customer in association. When the transaction information request including the transaction-specific information is received from the cash register 5, the server apparatus 2 outputs the transaction information corresponding to the transaction-specific information to the cash register 5 under the condition that the transaction-specific information included in the received transaction information request and the checking completion information are registered in association. The attendant PC 6 displays the transaction list screen on which the state information of the customer related to each transaction managed by the server apparatus 2 is displayed. When an operation of designating a specific transaction is received, the transaction detail screen representing the transaction information of the designated transaction and including the OK button 728 for receiving an attendant checking operation is displayed. The attendant PC 6 transmits the transaction-specific information and the checking completion information to the server apparatus 2 under the condition that the OK button 728 is operated. The cash register 5 transmits the transaction information request to the server apparatus 2 and performs the checkout process based on the received transaction information when the transaction information is received as a response to the transaction information request from the server apparatus 2. The attendant PC 6 displays the transaction detail screen on which the OK button 728 is validated or invalidated in accordance with an operation method of receiving designation of the transaction, and the server apparatus 2 registers the checking completion information in association with the transaction-specific information when the checking information including the transaction-specific information is transmitted from the attendant PC 6.

Accordingly, the transaction management system 1 can guide a customer to receive the attendant checking before the customer performs payment with the cash register 5. Therefore, checking work by the attendant becomes easy. In the attendant PC 6 performing the attendant checking, it is possible to display the transaction detail screen on which the OK button 728 is validated or invalidated in accordance with the operation method when the transaction is designated. Therefore, it is possible to reduce a situation in which the attendant checking is performed on an erroneously selected (designated) transaction.

The transaction management system 1 according to the embodiment further includes the attendant PC 6 operated by a staff member. The attendant PC 6 displays the transaction information received from the server apparatus 2 and transmits the input checking completion information in association with the transaction-specific information to the server apparatus 2, and the server apparatus 2 stores the received checking completion information and the transaction-specific information in association.

Accordingly, the attendant can perform the attendant checking and input the checking completion information in the attendant PC 6 while confirming the transaction information of the customer with the attendant PC 6. Therefore, checking work by the attendant becomes easy.

Further, the attendant PC 6 of the transaction management system 1 according to the embodiment highlights a preset specific commodity (highlight commodity) and displays the transaction information. In addition, the attendant PC 6 of the transaction management system 1 according to the embodiment displays a comment related to the checking of the commodity for each specific commodity.

Accordingly, the attendant can easily recognize the commodities to be checked. Therefore, checking work by the attendant becomes easy.

In an embodiment, the control programs executed in each of the server apparatus 2, the portable terminal 4, the cash register 5, and the attendant PC 6 may be recorded and provided on a computer-readable recording medium such as a CD-ROM. The control programs executed in each apparatus may be stored on a computer connected to a network such as the Internet and downloaded, distributed or accessed via a network such as the Internet.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the content of the disclosure. The accompanying claims are intended to cover such forms or modifications as would fall within the scope of the disclosure.

## Claims

1. An attendant terminal for monitoring of retail transactions, the attendant terminal comprising:
a communication interface connectable to a transaction management apparatus; and
a control unit configured to:
cause a first screen to be displayed on a display screen, the first screen listing present transaction statuses for a plurality of customer transactions managed by the transaction management apparatus;
receive a first-type designation or a second-type designation of a specific transaction in the plurality of customer transactions; and
cause a second screen to be displayed on the display screen after the receiving either the first-type designation or the second-type designation, the second screen displaying transaction information of the specific transaction corresponding to the received first-type or second-type designation and permitting confirmation of an attendant checking operation for the specific transaction when the first-type designation is received and not permitting confirmation of the attendant checking operation when the second-type designation is received.

2. The attendant terminal according to claim 1, wherein the second screen includes a button for confirmation of the attendant checking operation when the first-type designation is received.

3. The attendant terminal according to claim 2, wherein the button is displayed on the second screen in a non-selectable state when the second-type designation is received.

4. The attendant terminal according to claim 2, wherein the button is not displayed on the second screen when the second-type designation is received.

5. The attendant terminal according to any one of claims 1 to 4, wherein the transaction information displayed on the second screen is editable via the second screen when the first-type designation is received.

6. The attendant terminal according to claim 5, wherein the transaction information displayed on the second screen is not editable via the second screen when the second-type designation is received.

7. The attendant terminal according to any one of claims 1 to 6, wherein the first-type designation is an entry of a transaction code at the attendant terminal.

8. The attendant terminal according to claim 7, wherein the entry is a manual typing of the transaction code.

9. The attendant terminal according to claim 7, wherein the entry is a scanning of encoded transaction code.

10. The attendant terminal according to claim 7, wherein the second-type designation is a selection of a customer transaction from the first screen.

11. The attendant terminal according to any one of claims 1 to 10, further, comprising:
the display screen for displaying information to an attendant monitoring retail transactions;
a scanner for reading barcodes displayed on a mobile terminal of a customer.

12. A retail transaction management system, comprising:
a transaction management server configured to receive registration of commodities in a plurality of customer transactions at a store;
an attendant terminal for a store attendant to monitor retail transactions at the store and perform attendant checking operations prior to settlement of customer transactions;
a payment register at which a customer can settle a customer transaction after an attendant checking operation is performed for the customer transaction, wherein
the attendant terminal includes:
a communication interface connected to transaction management server; and
a control unit configured to:
cause a first screen to be displayed on a display screen, the first screen listing present transaction statuses for the plurality of customer transactions;
receive a first-type designation or a second-type designation of a specific transaction in the plurality of customer transactions; and
cause a second screen to be displayed on the display screen after the receiving either the first-type designation or the second-type designation, the second screen displaying transaction information of the specific transaction corresponding to the received first-type or second-type designation and permitting confirmation of the attendant checking operation for the specific transaction when the first-type designation is received and not permitting confirmation of the attendant checking operation when the second-type designation is received.

13. The retail transaction management system according to claim 12, wherein the second screen includes a button for confirmation of the attendant checking operation when the first-type designation is received.

14. The retail transaction management system according to claim 13, wherein the button is displayed on the second screen in a non-selectable state when the second-type designation is received, and, wherein the transaction information displayed on the second screen is editable via the second screen when the first-type designation is received.

15. The retail transaction management system according to any one of claims 12 to 14, wherein
the attendant terminal further includes a scanner for reading barcodes displayed on a mobile terminal of the customer,
the first-type designation is a reading of a barcode displayed on the mobile terminal of the customer with the scanner, the barcode encoding a transaction code of the specific transaction, and
the second-type designation is a selection of a customer transaction from the first screen.
